# EUROPÄISCHE PATENTSCHRIFT

(11) **EP 1 957 826 B1**
(45) Veröffentlichungstag und Bekanntmachung des Hinweises auf die Patenterteilung: **22.12.2010**
(21) Anmeldenummer: 06829124.4
(22) Anmeldetag: 25.11.2006
(51) Int. Cl.: F16F 15/16

(54) **TORSIONSSCHWINGUNGSDÄMPFER**
TORSIONAL VIBRATION DAMPER
AMORTISSEUR D'OSCILLATIONS DE TORSION

(30) Priorität: 08.12.2005 DE 102005058531
(43) Veröffentlichungstag der Anmeldung: 20.08.2008
(73) Patentinhaber: ZF Friedrichshafen AG, 88046 Friedrichshafen (DE)
(72) Erfinder: KISTER, Igor, 97076 Würzburg (DE); DOEGEL, Thomas, 97688 Bad Kissingen (DE); BACH, Hartmut, 97422 Schweinfurt (DE); EICHHORN, Frank, 74336 Brachenheim (DE)
(86) Internationale Anmeldenummer: PCT/EP2006/011314
(87) Internationale Veröffentlichungsnummer: WO 2007/065569

(56) Entgegenhaltungen:
- DE-A1- 10 256 191
- DE-A1- 19 626 729
- DE-A1- 19 628 853
- JP-A- 4 327 046
- JP-A- 2001 099 231
- JP-A- 2005 273 816
- US-A- 1 684 568

## Beschreibung

### Technisches Gebiet

Die Erfindung betrifft einen Torsionsschwingungsdämpfer gemäß dem Oberbegriff des Anspruchs 1.

### Stand der Technik

Durch die DE 102 56 191 A1 ist ein Torsionsschwingungsdämpfer mit einem antriebsseitiges Übertragungselement, einem gegenüber demselben um eine im wesentlichen identische Drehachse drehauslenkbares abtriebsseitigen Übertragungselement und einer zwischen den beiden Übertragungselementen vorgesehenen Dämpfungseinrichtung bekannt. Das antriebsseitige Übertragungselement ist mit einem Antrieb, wie einer Kurbelwelle einer Brennkraftmaschine verbunden, während das abtriebsseitige Übertragungselement über eine Kopplungsvorrichtung, beispielsweise durch eine ein- oder ausrückbare Reibungskupplung gebildet, mit einem Abtrieb, wie einer Getriebeeingangswelle, in Wirkverbindung bringbar ist. Die Dämpfungseinrichtung ist mit einem Federsystem, aufweisend eine Mehrzahl von Gasfedern, und einem Zusatzfedersystem, enthaltend eine Mehrzahl von Stahlfedern, zur Übertragung eines Drehmomentes zwischen dem antriebsseitigen und dem abtriebsseitigen Übertragungselement versehen. Während die Stahlfedern in bekannter Weise durch Verformung bei Torsionsschwingungen harte Stöße jeweils in einen weicheren Schwingungsvorgang umformen, dienen die Gasfedern zu einem Dämpfungsvorgang, bei welchem Stoßenergie abgebaut wird. Hierzu verfügen die Gasfedern jeweils über einen ein gasförmiges Medium, wie Luft, enthaltenden Speicherraum innerhalb eines Zylinderraums, wobei dieses gasförmige Medium bei Kompression der Gasfedern und dadurch bedingter Volumenreduzierung des Speicherraums über eine Drosselöffnung aus dem Speicherraum herausgepresst wird. Verständlicherweise wird bei Entlastung der Gasfeder und damit verbundener Volumenerhöhung im Speicherraum aus der Umgebung der Gasfeder wieder frisches gasförmiges Medium über die Drosselöffnung nachgesaugt. Damit ist eine geschwindigkeitsproportionale Dämpfung realisierbar, und zwar ohne spezielle Dichtungserfordernisse.

Bei dem bekannten Federsystem ergibt sich der Druck im Speicherraum und damit das Dämpfungsverhalten durch den jeweiligen Verformungszustand, und wird daher in Fachkreisen als "passives" Federsystem bezeichnet. Die Drosselöffnung ist für sämtliche denkbaren Lastzustände ausgelegt, und kann demnach lediglich einen Kompromiss bilden. Das gleiche Problem ergibt sich auch bei den Stahlfedern, die bezüglich ihrer Kennlinie nur kompromissbehaftet an die im Betrieb auftretenden unterschiedlichen Lastzustände anpassbar sind.

Um diesem Problem bei Stahlfedern entgegen zu wirken, zeigt die DE 41 28 868 A1 die Möglichkeit, bei einer Mehrzahl von in Umfangsrichtung hintereinander angeordneten Stahlfedern die einzelnen Stahlfedern mit unterschiedlichen Kennlinien abzustimmen, so dass bei Einleitung kleiner Drehmomente lediglich Stahlfedern mit flacher verlaufenden Kennlinien komprimiert werden, und erst mit zunehmendem Drehmoment auch Stahlfedern mit steileren Kennlinien verformt werden. Problematisch gestaltet sich hierbei die Drehzahlabhängigkeit der Stahlfedern, da deren Windungen mit zunehmender Fliehkraft nach radial außen gepresst werden, und sich dort verhaken. Torsionsschwingungen führen dadurch nicht zwingend zur Kompression der in Einleitungsrichtung der Torsionsschwingung benachbarten Stahlfeder, so dass Betriebsbedingungen auftreten können, bei denen die Dämpfungseinrichtung zunächst überhaupt keine Dämpfungswirkung erbringt. Erst höhere Lastzustände vermögen ein Lösen der Stahlfeder von ihrer radial äußeren Anlage zu bewirken, was als komfortmindemder Ruck im Fahrzeug empfunden wird, um allerdings bei der in Umfangsrichtung benachbarten Stahlfeder, die mit einer steileren Kennlinie ausgebildet sein kann, zunächst wieder aufzulaufen, bis auch diese Stahlfeder bei nochmals höherem Lastzustand von ihrer radial äußeren Anlage losgerissen wird. Im Gesamtergebnis steht demnach bei einer derartigen Betriebsweise nie das gesamte Federvolumen zur Verfügung, sondern stets nur ein Teil hiervon. Dieses Problem lässt sich durch die bei der DE 41 28 868 A1 vorgesehenen Schiebeelemente zwischen den Stahlfedern und deren radial äußerer Anlage zwar günstig beeinflussen, aber nicht vermeiden. Insofern ergibt sich bei derartigen Torsionsschwingungsdämpfern einerseits eine unzureichende Entkoppelungsgüte, und andererseits aufgrund hoher Steifigkeiten in der Dämpfungseinrichtung eine Eigenfrequenz in einem beim Fahren vergleichsweise häufig genutzten Drehzahlbereich. Besonders kritisch ist hierbei der untere Drehzahlbereich zwischen im wesentlichen 1000 und 2000 Umdrehungen/Minute bei gleichzeitig hohem Motormoment und entsprechend hohen Anregungen von Torsionsschwingungen, wodurch im Fahrzeug Brummgeräusche entstehen.

Durch die EP 1 715 216 A2 ist ein Torsionsschwingungsdämpfer bekannt, der ein mit einem Antrieb verbundenes antriebsseitiges Übertragungselement aufweist, ein mit einem Abtrieb in Wirkverbindung bringbares, gegenüber dem antriebsseitigen Übertragungselement drehauslenkbares abtriebsseitiges Übertragungselement und eine zwischen den beiden Übertragungselementen vorgesehene Dämpfungseinrichtung mit einem Federsystem, das zur Übertragung eines Drehmomentes zwischen dem antriebsseitigen und dem abtriebsseitigen Übertragungselement dient und mindestens über einen Speicherraum mit gasförmigem Medium verfügt. Der jeweilige Speicherraum des Federsystems ist an einen Druckkreis angeschlossen, durch welchen bei einer Änderung des zu übertragenden Drehmomentes mittels einer Neueinstellung des im Speicherraum anliegenden Druckes eine Anpassung der Kennlinie des Federsystems an das geänderte Drehmoment auslösbar ist. Der Speicherraum steht über einen Trennkolben mit einem jeweils zugeordneten, ein fluidförmiges Medium enthaltenden Druckraum in Wirkverbindung, wobei durch den Druckraum ein Druck auf einen verlagerbaren Kolben des Federsystems ausübbar ist.

Aufgrund des im Druckraum enthaltenen fluidförmigen Mediums werden Bewegungen von Trennkolben und Kolben unverzüglich aneinander übertragen. Weitere Funktionen kommen dem Druckraum nicht zu. Anders als der Druckraum ist der Speicherraum aufgrund seines Anschlusses an den Druckkreis zwar bezüglich des Drucks regelbar, jedoch werden entsprechende Regelvorgänge aufgrund der Kompressibilität des im Speicherraum verwendeten gasförmigen Mediums verzögerungsbehaftet weitergeleitet, so dass die durch Befüllung des Druckraums mit fluidförmigem Medium erzielte Übertragungsspontaneiät nicht zum Tragen kommt.

Der Erfindung liegt die Aufgabe zugrunde, die Dämpfungseinrichtung eines Torsionsschwingungsdämpfers derart auszubilden, dass unerwünschte Brummgeräusche auch unter Extrembedingungen vermeidbar sind.

Diese Aufgabe wird gemäß dem Anspruch 1 gelöst. Durch Anwesenheit eines mit fluidförmigem Medium, wie Hydraulikflüssigkeit, befüllten Druckraumes, der einem mit gasförmigem Medium, wie Luft, befüllten Speicherraum des Federsystems zugeordnet und an einen Druckkreis angeschlossen ist, entsteht ein "aktives" hydropneumatisches Federsystem, welches anspruchsgemäß die Möglichkeit bietet, bei einer Änderung des von dem Federsystem zu übertragenden Drehmomentes mittels einer Neueinstellung des im Druckraum und damit auch im Speicherraum anliegenden Druckes zumindest im Wesentlichen eine Anpassung der Kennlinie des Federsystems an das geänderte Drehmoment auszulösen. In Fachkreisen wird hierbei zwischen "vollaktiven" und "teilaktiven" Federsystemen unterschieden, wobei im Fall vollaktiver Federsysteme bei jeglicher Änderung des fahrbedingten Motormoments sofort durch Zuführung fluidförmigen Mediums in den Druckraum oder durch Abführung dieses Mediums aus dem Druckraum nachgeregelt wird, während im Fall teilaktiver Federsysteme nur bei großen Änderungen des Motormoments eine Nachregelung erfolgt, ansonsten das Federsystem aber vergleichbar mit einem passiven Federsystem ohne Nachregelung betrieben wird. Die teilaktiven Federsysteme verfügen demnach,

verglichen mit den vollaktiven Systemen, aufgrund der deutlich reduzierten Anzahl von Regelvorgängen mit zudem eingeschränktem Erfordernis einer hohen Nachregelgeschwindigkeit über den Vorteil, mit gegenüber den vollaktiven Systemen geringeren Strömungsgeschwindigkeiten bei der Verlagerung fluidförmigen Mediums zwischen dem Druckkreis und dem Druckraum arbeiten zu können. Dadurch zeichnen sich teilaktive Federsysteme durch einen geringen Energiebedarf sowie das Erfordernis nur begrenzt leistungsfähiger Speicher für fluidförmiges Medium oder gar durch den völligen Verzicht auf Speicher aus. Geringer als bei vollaktiven Federsystemen kann bei teilaktiven Federsystemen auch die Pumpenleistung sein.

Mit Vorzug wird eine Anpassung der Kennlinie des Federsystems an ein geändertes Drehmoment durch Neueinstellung des im Druckraum des Federsystems und damit des im Steuerraum des Federsystems anliegenden Druckes in Abhängigkeit von fahrzeug- und/oder fahrzustandsrelevanter Bedingungen vorgenommen. Arbeitet hierbei der Druckkreis mit einer Steuerungs- und/oder Regelungsvorrichtung, nachfolgend kurz als "Regelung" bezeichnet, zusammen, so kann diese Regelung beispielsweise auf in der Fahrzeugsteuerung abgelegte Betriebspunkte zurückgreifen und demnach eine stets den jeweiligen fahrzeug- und/oder fahrzustandsrelevanten Bedingungen zugeordnete Versorgung des Druckraums mit fluidförmigem Medium bewirken. Aufgrund des somit im Druckraum enthaltenen Überdruckes erfolgt jeweils die Einstellung des im mit gasförmigem Medium befüllten Speicherraum enthaltenen Überdruckes gegenüber der Umgebung und damit die Vorgabe der Kennlinie des Federsystems. Dadurch steht für jedes anliegende Drehmoment, das bei Zugbetrieb von einem Antrieb, wie der Kurbelwelle einer Brennkraftmaschine, oder bei Schubbetrieb von einem Abtrieb, wie einer Getriebeeingangswelle, in den Torsionsschwingungsdämpfer eingeleitet wird, stets eine diesem Drehmoment entsprechende Kennlinie im Federsystem zur Verfügung, so dass zumindest im wesentlichen stets der volle Kompressionsweg des Federsystems verfügbar ist. Im Gegensatz zu rein passiv wirksamen Federsystemen, deren Kennlinie derart abgestimmt ist, dass sie mit dem verfügbaren Federweg beginnend bei kleinen Drehmomenten bereits eine Relativauslenkung von Übertragungselementen ermöglichen, bei maximalen Drehmomenten aber immer noch diesen Federweg zur Verfügung haben, liegt bei dem erfindungsgemäßen aktiven Federsystem durch die Anpassung der Kennlinie an das jeweilige Drehmoment praktisch eine "virtuelle" Vervielfachung des Federweges vor. Entsprechend hoch ist die Entkopplungsgüte dieses Torsionsschwingungsdämpfers, und entsprechend niedrig seine Eigenfrequenz, die außerhalb des typischen Drehzahlbereichs eines Fahrzeuges bei den üblichen Fahrbedingungen liegt.

Sollte trotz der zuvor erwähnten geringen Eigenfrequenz des Torsionsschwingungsdämpfers einmal ein Resonanzverhalten auftreten, kann der Druck im Druckraum und damit im Speicherraum auf ein Niveau, beispielsweise auf das Niveau maximaler Vorspannung, angehoben und auf diesem Niveau gehalten werden, so dass eine Relativdrehbewegung der zueinander verdrehbaren Übertragungselemente des Torsionsschwingungsdämpfers zumindest weitgehend vermieden wird. Wird die Reduzierung des Drucks und damit die Vorspannung des Federsystems bis zum Ablauf eines vorbestimmbaren Zeitraums aufgeschoben, kann eine Schädigung der Dämpfungseinrichtung wirksam vermieden werden. Ebenfalls vorteilhaft ist die Anhebung des Druckes im Druckraum und damit im Speicherraum auf ein Niveau beispielsweise maximaler Vorspannung bei Zylinderabschaltung und Betrieb mit Ordnungen unterhalb der Zündanregung.

Die gleiche Vorgehensweise bietet sich an, wenn im Fall permanenter Lastwechsel durch ständigen Übergang zwischen Druckerhöhung und Druckabsenkung ein zwischen dem Federsystem und der Pumpe vorgesehener Versorgungsspeicher komplett entleert wird, und die Pumpe allein nicht zur Bereitstellung des Volumenstromes an fluidförmigem Medium befähigt ist, der zur Gewährleistung der in rascher Folge geforderten Druckänderungen im Druckraum benötigt wird.

Alternativ zu dieser Vorgehensweise oder auch ergänzend kann dem Federsystem jeweils eine Drehwinkelbegrenzung zugeordnet sein. Diese ist gemeinsam mit dem Federsystem, insbesondere mit einem Zylinder dieses Federsystems, an einem Übertragungselement des Torsionsschwingungsdämpfers vorgesehen, während am jeweils anderen Übertragungselement des Torsionsschwingungsdämpfers ein mit der Drehwinkelbegrenzung zusammen wirkendes Ansteuerelement für einen im Zylinder verlagerbaren Steuerkolben angeordnet ist. Kommt es nun zu großen Drehwinkelauslenkungen zwischen den beiden Übertragungselementen, so wird das Ansteuerelement relativ zu dem Zylinder in Umfangsrichtung ausgelenkt, bis es an der Drehwinkelbegrenzung in Anlage kommt, und somit die Relativauslenkung der beiden Übertragungselemente beendet. Dieser Drehwinkelbegrenzung ist mit Vorzug eine Abdichtung zugeordnet, um einen Austritt gas- und/oder fluidförmigen Mediums an der Stelle relativer Bewegung zwischen den beiden Übertragungselementen zu verhindern.

Der vorgenannte Versorgungsspeicher ist durch die Pumpe mit fluidförmigem Medium befüllbar. Aufgrund dieses Versorgungsspeichers besteht die Möglichkeit, durch Bereitstellung eines erheblichen Volumenstromes sehr kurzfristig eine beträchtliche Druckerhöhung im Druckraum zu bewirken. Für eine ebenfalls kurzfristige und beträchtliche Druckabsenkung im Druckraum kann zwischen demselben und der Pumpe ein Niederdruckspeicher vorgesehen sein. Zwischen den besagten Speichern und dem Druckraum sind vorteilhafterweise Stellglieder, wie Ventile, vorgesehen, deren Durchflussweite zur Beeinflussung der Druckanhebung oder Druckabsenkung mittels der Regelung des Druckkreises beeinflussbar ist.

Trotz des beim erfindungsgemäßen Torsionsschwingungsdämpfer bezüglich seiner Wirkung extrem großen Federweges ist der tatsächliche Bauraumbedarf des Federsystems ebenso wie dessen Massenträgheitsmoment gering. Ungeachtet dieses ohnehin vorhandenen Vorteils kann der Federweg ohne Verlust der vorgenannten Vorteile noch weiter vergrößert werden, wenn ein den Speicherraum des Federsystems vergrößernder Zusatzspeicherraum vorgesehen ist, der mit dem Speicherraum in Druckverbindung steht. Entsprechend gering kann die an das jeweilige Drehmoment angepasste Federsteifigkeit ausgelegt werden, so dass eine extreme Entkopplungsgüte erzielbar ist.

Die Herstellung einer Druckverbindung zwischen einem zumindest im wesentlichen ortsfesten Druckkreisanteil eines Druckkreises und dem den Drehbewegungen der Übertragungselemente um eine gemeinsame Drehachse nachgeführten Federsystem erfolgt vorteilhafterweise mittels zumindest einer Drehdurchführung. Diese verfügt vorteilhafterweise über ein Druckleitelement, das entweder dem Antrieb oder aber dem Abtrieb zugeordnet sein kann.

Bei Zuordnung des externen Druckkreisanteils zum Abtrieb sind mindestens zwei Drehdurchführungen notwendig, und zwar eine erste zwischen dem Druckkreisanteil und dem Abtrieb, und eine zweite zwischen dem letztgenannten und dem entsprechenden Übertragungselement, vorzugsweise also dem antriebsseitigen Übertragungselement. Zur Weiterleitung des fluidförmigen Mediums in das Federsystem kann eine dem antriebsseitigen Übertragungselement zugeordnete Zuleitung dienen.

Das Federsystem ist mit einem die Federwirkung zulassenden Speicherraum für gasförmiges Medium ausgebildet, weshalb nachfolgend kurz von einer "Gasfeder" gesprochen wird. Obwohl eine Gasfeder einen Grunddruck benötigt, und somit über eine systembedingte Mindestvorspannung verfügen muss, kann dennoch eine Kennung erzeugt werden, die einer vorspannungsfreien Feder entspricht, wenn jeweils zwei Gasfedern einander entgegenwirkend angeordnet sind. Aufgrund dieser Maßnahme kann nicht nur bereits auf kleinste Momentenänderungen reagiert werden, sondern darüber hinaus ist der Torsionsschwingungsdämpfer sowohl für Zugbetrieb als auch für Schubbetrieb gleichermaßen geeignet.

Es kann vorteilhaft sein, jeden Zylinder des jeweiligen Federsystems sowohl für Zugbetrieb als auch für Schubbetrieb auszubilden. Hierzu werden beispielsweise, ausgehend vom Mittenbereich des Zylinders, spiegelbildlich die einzelnen Bauteile des Zylinderraumes, wie Steuerkolben, Dichtkammern und Zusatztrennkolben, angeordnet und mittels einer gemeinsamen Steuerkammer voneinander getrennt. Ebenfalls gemeinsam können die Bauteile der beiden Zylinderhälften einen Druckraum sowie zwischen demselben und dem Speicherraum vorgesehene Trennkolben, gegebenenfalls auch ein dem Speicherraum zugeordneter Zusatzspeicherraum sein. Mit Vorzug sind hierbei die einzelnen Bauteile der beiden Zylinderhälften massearm ausgebildet, um einerseits bei eingeleiteten Torsionsschwingungen und andererseits bei raschen Änderungen des zu übertragenden Drehmomentes trägheitsarm reagieren zu können, und um andererseits auch die Trägheit der gesamten Zylinderaufnahme zu begrenzen. Vorteilhafterweise sind hierzu die Steuerkolben dünnwandig ausgebildet.

Das Federsystem kann mit dem antriebsseitigen Übertragungselement und/oder dem abtriebsseitigen Übertragungselement in Wirkverbindung stehen. Mit Vorzug wird hierbei sowohl der mit gasförmigem Medium befüllte Zylinderraum des jeweiligen Zylinders als auch der mit fluidförmigem Medium befüllte Druckraum zumindest im wesentlichen im antriebsseitigen Übertragungselement angeordnet sein, eine den Druck im Druckraum einstellende Druckvorgabeeinrichtung dagegen im wesentlichen im abtriebsseitigen Übertragungselement.

Gemäß einer vorteilhaften Ausgestaltung der Druckvorgabeeinrichtung kann diese durch einen Fluidverdränger gebildet werden, der in einem als Druckraum dienenden Fluidaufnehmer verlagerbar, beispielsweise relativ drehbar oder aber in Umfangsrichtung verschiebbar, angeordnet ist, oder aber durch Druckänderung an einem dem Druckraum zugeordneten Druckraumanschluss.

Da das Federsystem über zumindest einen mit fluidförmigem Medium befüllten Druckraum und über zumindest einen mit gasförmigem Medium befüllten Speicherraum verfügt, sind diese Räume jeweils durch Trennkolben, gegebenenfalls auch durch Zusatztrennkolben, voneinander isoliert. Das viskose Medium des jeweiligen Druckraumes sorgt außer für den Druckaufbau auch für eine Schmierung einer dem Trennkolben oder dem Zusatztrennkolben eventuell zugeordneten Abdichtung. Die Schmierung der Abdichtung hat im wesentlichen den Sinn, das "Losbrechmoment" der Dichtung, also dasjenige Moment, ab welchem der Trennkolben nicht mehr reibungsbedingt über die Dichtung an der zugeordneten Raumwandung anhaftet, sondern sich von derselben löst, zu minimieren. Dadurch kann der Trennkolben bereits bei kleinsten Lastwechseländerungen weich ausgelenkt werden.

Es kann zweckmäßig sein, axial zwischen den Übertragungselementen des Torsionsschwingungsdämpfers einen Axialenergiespeicher vorzusehen, beispielsweise zwischen einem Ansteuerelemententräger, welcher über Ansteuerelemente für das zugeordnete Federsystem verfügt, und einer abtriebsseitigen Schwungmasse. Hierdurch werden der Ansteuerelemententräger und damit die Ansteuerelemente in Richtung zur Seite des Antriebs vorgespannt, was bei Aufnahme einer federbelasteten Reibungskupplung durch die abtriebsseitige Schwungmasse von Vorteil sein kann.

Gemäß einer anderen Ausführung der Erfindung kann es vorteilhaft sein, die Zylinder des Federsystems in Umfangsrichtung verlagerbar in einer Tragvorrichtung aufzunehmen, die über eine Relativdrehbarkeit gegenüber beiden Übertragungselementen verfügt und gegenüber den Übertragungselementen zentriert ist. Die Tragvorrichtung weist Durchgriffe für die Ansteuerelemente zumindest eines Übertragungselementes, vorzugsweise hierbei des antriebsseitigen Übertragungselementes, auf. Bei einer derartigen Aufnahme der Zylinder ergibt sich die Möglichkeit, mit nur einem Steuerkolben beide möglichen Drehrichtungen, also bei Zugbetrieb und bei Schubbetrieb, zu realisieren, indem der gesamte Zylinder anstelle eines ansonsten im Zylinder angeordneten zusätzlichen Steuerkolbens in Umfangsrichtung verlagerbar ist. Zu diesem Zweck ist jeder Zylinder mit einem Zentriersegment ausgebildet, über das er zwar radial und axial in der Tragvorrichtung positioniert ist, in Umfangsrichtung aber eine Relatiwerlagerung gegenüber dem Zentriersegment auszuführen vermag. Federbewegungen sind bei dieser Konstruktion entweder durch Verlagerung des Steuerkolbens gegenüber dem den Steuerkolben umgreifenden Zylinder mittels eines Ansteuerelementes eines Übertragungselementes oder aber durch Verlagerung des Zylinders gegenüber dem Steuerkolben mittels eines Ansteuerelementes des jeweils anderen Übertragungselementes möglich. Insgesamt kann mit dieser Ausführung außer dem besagten zweiten Steuerkolben auch die demselben zugeordnete Dichtkammer sowie der ebenfalls dem zweiten Steuerkolben zugeordnete Trennkolben beaufschlagt werden.

Gemäß einer weiteren Ausführung der Erfindung verfügt der Hauptdruckraumanteil des Druckraumes an seinen umfangsseitigen Enden über jeweils einen Steuerkolben, und ist mittels zumindest einer Druckraumpassage mit dem Zusatzdruckraumanteil des Druckraumes verbunden, der über eine Dichtkammer und einen Trennkolben mit dem Speicherraum in Wirkverbindung steht. Hierbei sind die vom Druckleitelement über die zweite Drehdurchführung in den Hauptdruckraumanteil führenden Fluidleitungen jeweils im Erstreckungsbereich zumindest eines der Steuerkolben mittels Druckraumanschlüssen bewegungsgesicliert aufgenommen. Bei dieser Ausführung ist die Druckvorgabeeinrichtung ausschließlich hydraulisch wirksam, so dass ein im Speicherraum ohnehin vorhandener Trennkolben komplett die Komprimierung des im Speicherraum enthaltenen viskosen Mediums übernimmt. Somit kann auf einen weiteren Trennkolben im Speicherraum verzichtet werden.

### Kurze Beschreibung der Zeichnungen

Die Erfindung ist anhand von in der Zeichnung dargestellter Ausführungsbeispiele beschrieben. Es zeigt:
- Fig.1: Einen Torsionsschwingungsdämpfer mit einem hydropneumatischen Federsystem, bei welchem eine Druckvorgabeeinrichtung durch einen Fluidverdränger gebildet ist, in Explosionsdarstellung;
- Fig. 2: eine Ansicht des Torsionsschwingungsdämpfers mit Blickrichtung A in Fig. 1;
- Fig. 3: eine Ansicht des Torsionsschwingungsdämpfers mit Blickrichtung B in Fig. 2;
- Fig. 4: eine Schnittdarstellung gemäß der Schnittlinie IV - IV in Fig. 2;
- Fig. 5: eine Schnittdarstellung gemäß der Schnittlinie V - V in Fig. 3;
- Fig. 6: eine Schnittdarstellung gemäß der Schnittlinie VI - VI in Fig. 2;
- Fig. 7: eine Schnittdarstellung gemäß der Schnittlinie VII - VII in Fig. 3;
- Fig. 8: einen schematisch dargestellten Druckkreis zur Versorgung des Federsystems mit fluidförmigem Medium;
- Fig. 9: ein Kennliniendiagramm des Federsystems;
- Fig. 10: eine andere Ausführung des Torsionsschwingungsdämpfers sowie des Federsystems in Explosionsdarstellung;
- Fig. 11: eine Schnittdarstellung durch ein antriebsseitiges Übertragungselement des Torsionsschwingungsdämpfers aus Blickrichtung A in Fig. 10;
- Fig. 12: wie Fig. 11, aber mit einer nochmals anderen Ausführung des Torsionsschwingungsdämpfers;
- Fig. 13: Darstellung des Torsionsschwingungsdämpfers gemäß der Schnittlinie XIII - XIII in Fig. 12;
- Fig. 14: wie Fig. 11, aber mit einer weiteren Ausführung des Torsionsschwingungsdämpfers;
- Fig. 15: Darstellung des Torsionsschwingungsdämpfers gemäß der Schnittlinie XV - XV in Fig. 14;
- Fig. 16: eine Darstellung des Zuführungsweges viskosen Mediums bei der Ausführung des Torsionsschwingungsdämpfers gemäß den Fig. 10 und 11, gesehen aus Blickrichtung A in Fig. 10;
- Fig. 17: Darstellung des Torsionsschwingungsdämpfers gemäß der Schnittlinie XVII - XVII in Fig. 16.

### Wege zur Ausführung der Erfindung

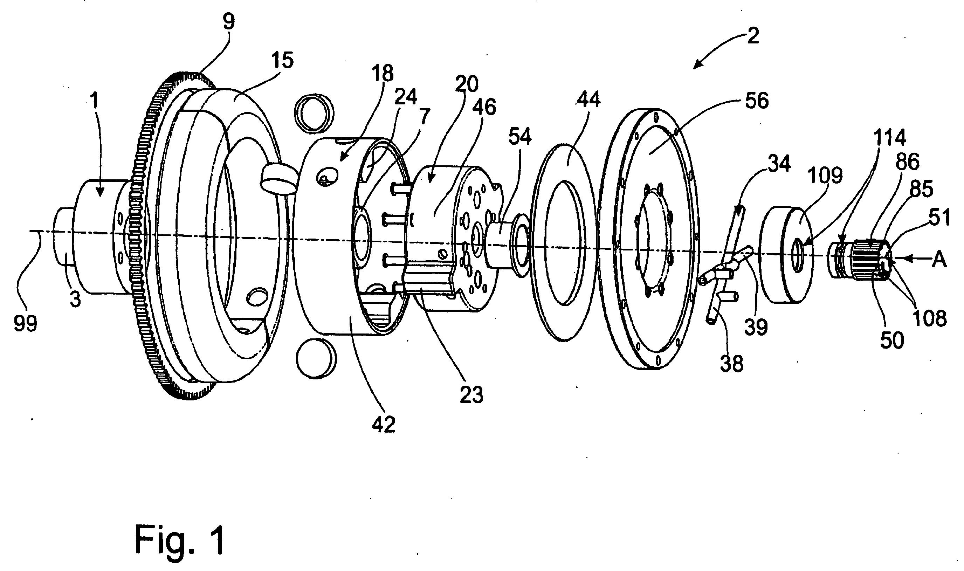

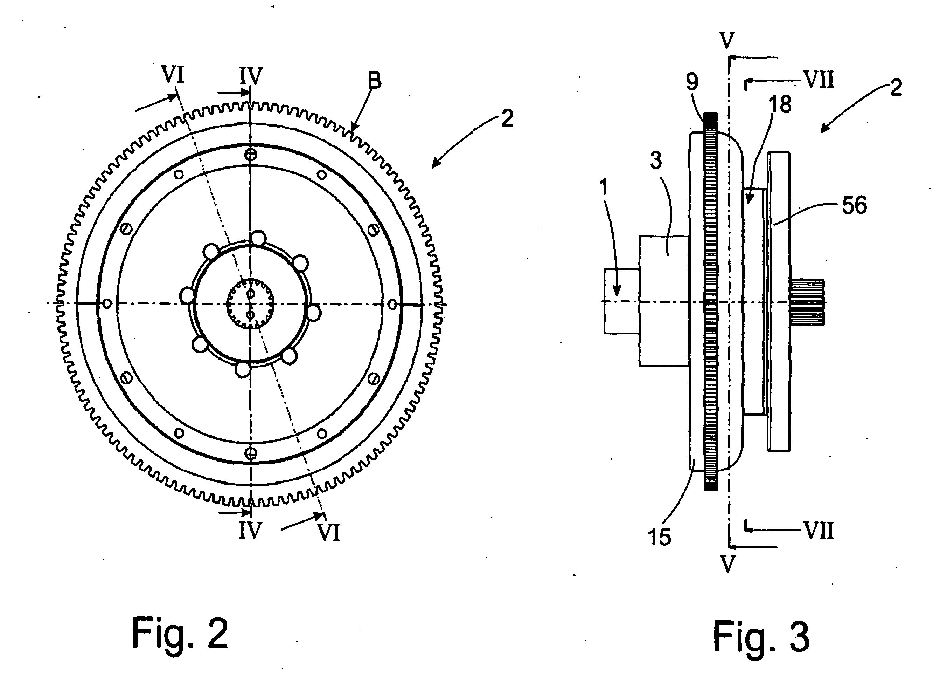

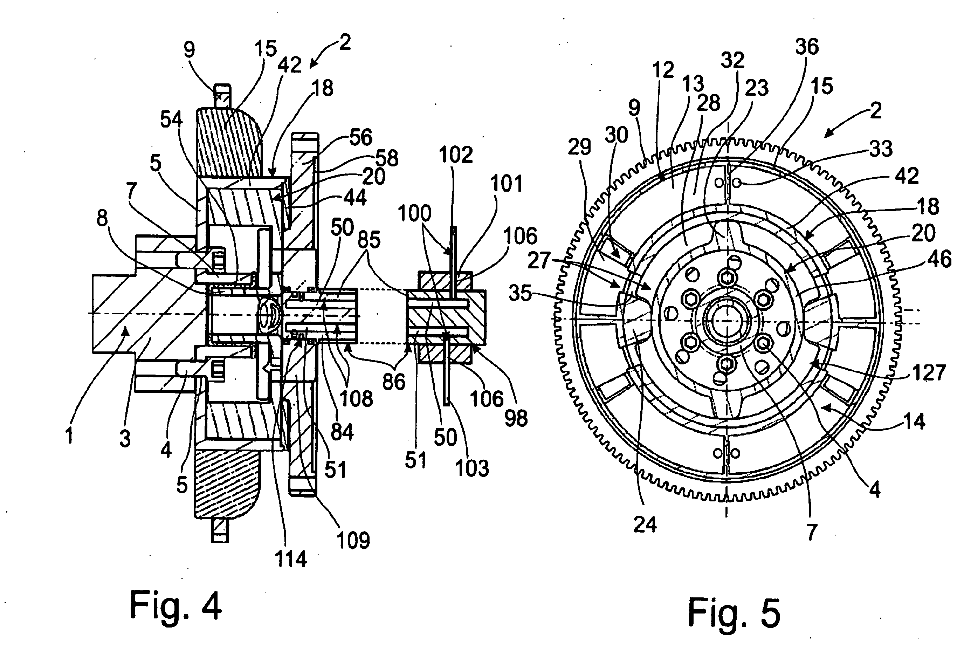

Die Fig. 1 bis 7 zeigen einen Torsionsschwingungsdämpfer 2, der, wie am besten aus Fig. 4 hervorgeht, an einem Antrieb 1, mit Vorzug durch eine Kurbelwelle 3 einer Brennkraftmaschine gebildet, mittels Verbindungselementen 4 befestigt ist. Die Verbindungselemente 4 durchgreifen Ausnehmungen 5 eines Radialflansches 5, der zusammen mit einem Umfangsring 42 und einem Abschlussdeckel 44 eine Fluidaufnahmekammer 18 bildet, die einen Fluidverdränger 20 umschließt. Der Radialflansch 5 weist darüber hinaus im radial inneren Bereich eine Primärnabe 7 auf, die über eine Lagerung 54 den Fluidverdränger 20 über eine Sekundämabe 8 desselben zentriert und axial positioniert.

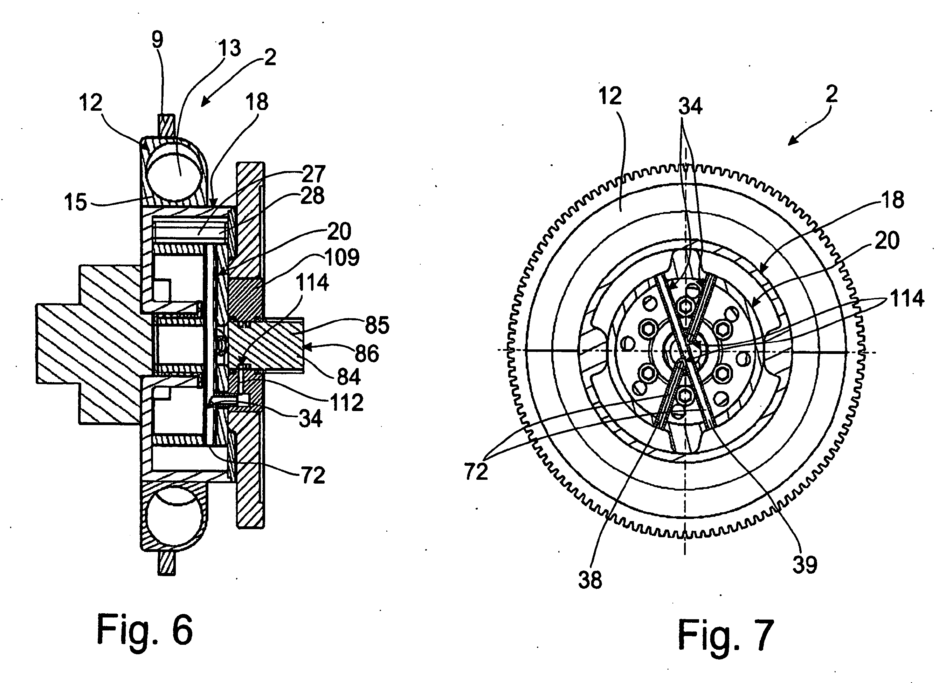

An der Fluidaufnahmekammer 18 ist, dieselbe radial umschließend, eine Zylinderaufnahme 15 befestigt, die von einem Zahnkranz 9 umgriffen ist und zur Aufnahme hydropneumatischer Federsysteme 14 in Form von Zylindern 12 (Fig. 5) mit jeweils im Querschnitt kreisförmigen Zylinderräumen 13 (Fig. 6) dient. Bei der in Fig. 5 gezeigten Ausführung des Torsionsschwingungsdämpfers 2 sind vier dieser Zylinder 12 entlang des Umfanges vorgesehen, von denen jeweils zwei entgegengesetzt zu einander wirken, so dass jeweils ein Zylinder 12 in einer ersten Auslenkrichtung für Zugbetrieb und jeweils der andere Zylinder 12 in einer zweiten Auslenkrichtung für Schubbetrieb vorgesehen ist. Die gleiche Situation gilt für die beiden übrigen Zylinder 12.

Jedes Federsystem 14 ist aus einem mit gasförmigem Medium, wie beispielsweise Luft, befüllten Speicherraum 32, einem mit fluidförmigem Medium, wie beispielsweise Hydraulikflüssigkeit, befüllten Druckraumanteil 29 eines Druckraumes 27 und einem dank einer Abdichtung 22 die beiden Räume 27, 32 voneinander isolierenden Trennkolben 30 gebildet, der bezüglich seiner Geometrie zumindest im Wesentlichen an die Querschnittsform der Zylinderräume 13 angepasst ist. Es bleibt nachzutragen, dass der jeweilige Speicherraum 32 über je einen Speicherraumanschluss 33 zum Auffüllen oder zur Entnahme gasförmigen Mediums verfügt, und je zwei einander entgegen wirkende Speicherräume 32 durch eine ortsfeste Trennwand 36 voneinander isoliert sind.

Der Druckraumanteil 29 steht über je eine Speicherraumpassage 35 in Verbindung mit einem Druckraumanteil 28 des Druckraumes 27. Der Druckraumanteil 28 erstreckt sich in Radialrichtung zwischen dem Umfangsring 42 der Fluidaufnahmekammer 18 und einem Aufnahmering 46 des Fluidverdrängers 20. In Umfangsrichtung erstreckt sich der Druckraumanteil 28 zwischen je einem Fluidverdrängungselement 23, das am Aufnahmering 46 vorgesehen ist und sich in Richtung zum Umfangsring 42 erstreckt, und einem Fluidsteuerelement 24, das am Umfangsring 42 vorgesehen ist und sich in Richtung zum Aufnahmering 46 erstreckt. Der Druckraumanteil 28 dient als Hauptdruckraumanteil und der Druckraumanteil 29 als Zusatzdruckraumanteil des Druckraumes 27. Bevor im Einzelnen auf die Versorgung des Druckraums 27 mit viskosem Medium eingegangen wird, soll darauf hingewiesen werden, dass der Fluidaufnehmer 20 zur drehfesten Anbindung einer abtriebsseitigen Schwungmasse 56 dient, die über eine Reibfläche 57 verfügt, an welcher in bekannter und somit nicht dargestellter Weise eine Kupplungsscheibe einer Reibungskupplung in Anlage bringbar ist. Auf diese Weise kann, in eingerücktem Zustand der Reibungskupplung, eine Drehmomentübertragung zwischen dem Antrieb 1 und dem Abtrieb 86 erfolgen, oder aber, in ausgerücktem Zustand der Reibungskupplung, unterbrochen werden. Eine derartige Reibungskupplung in Verbindung mit einer abtriebsseitigen Schwungmasse ist beispielsweise aus der DE 10 2004 012 425 A1 bekannt, so dass diese Veröffentlichung diesbezüglich als inhaltlich integriert betrachtet werden soll. Durch den Antrieb 1 soll in Verbindung mit der Fluidaufnahmekammer 18 und dem Zylinderaufnahme 14 inklusive des Zahnkranzes 9 ein antriebsseitiges Übertragungselement 88 des Torsionsschwingungsdämpfers 2 gebildet werden, durch den Fluidverdränger 18 in Verbindung mit der abtriebsseitigen Schwungmasse 56, der nicht gezeigten Reibungskupplung, der zweiten Drehdurchführung 104 und dem Abtrieb 86 dagegen ein abtriebsseitiges Übertragungselement 92 des Torsionsschwingungsdämpfers 2. Beide Übertragungselemente 88, 92 sind jeweils gegenüber einer im wesentlichen gleichen Drehachse 99 zentriert.

Die zuvor gezeigte Anordnung des Zahnkranzes 9 am antriebsseitigen Übertragungselement 88 ist aus folgendem Grund vorteilhaft: Beim Startvorgang wird das antriebsseitige Übertragungselement 88 ausgelenkt, das abtriebsseitige Übertragungselement 92 wirkt dagegen feststehend. Hierdurch wird ein Nachpumpen fluidförmigen Mediums aus dem Versorgungsspeicher 136 ausgelöst, wodurch sich die Vorspannung in den Federsystemen 14 erhöht. Die Vorspannung ist derart gerichtet, dass der Startvorgang durch die Federsysteme 14 unterstützt wird. Sofern dieser Effekt nicht gewünscht ist, kann der Zahnkranz 9 alternativ aber auch am abtriebsseitigen Übertragungselement 92 vorgesehen sein.

Der Druckraum 27, und insbesondere hierbei der Hauptdruckraumanteil 28, ist über eine Zuleitung 34 mit Fluidleitungen 38 und 39 (Fig. 6 und 7) an je einen in einem Druckkreisbauteil 109 vorgesehenen Radialdurchgang 112 angeschlossen, der mit als integrierte Druckleitung 108 dienenden Stömungskanälen 50, 51 (Fig. 4) eines als Druckleitelement 85 dienenden Abtriebes 86 in Form einer Getriebeeingangswelle 84 in Druckverbindung steht. Die Strömungskanäle 50, 51 stehen anderenends über je einen Radialdurchgang 106 eines Druckkreisbauteiles 101 in Druckverbindung mit einer Zuleitung 100, gebildet durch Fluidleitungen 102 und 103. Das abtriebsseitige Druckkreisbauteil 101 wirkt zusammen mit dem Abtrieb 86 als erste Drehdurchführung 98, während das antriebsseitige Druckkreisbauteil 109 zusammen mit dem Abtrieb als zweite Drehdurchführung 114 dient.

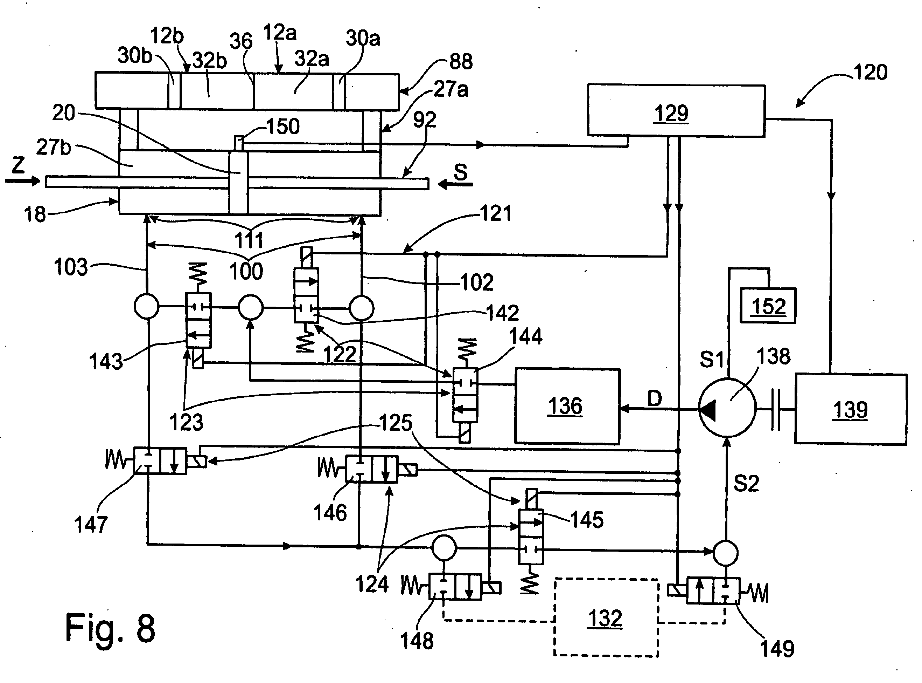

Der Torsionsschwingungsdämpfer 2 wirkt über die erste Drehdurchführung 98 mit einem in Fig. 8 lediglich schematisch dargestellten Druckkreisanteil 121 eines Druckkreises 120 zusammen. Zustromseitig ist hierbei die Fluidleitung 102 über ein Stellglied 142, die Fluidleitung 103 dagegen über ein Stellglied 143 an ein Stellglied 144 angeschlossen, das seinerseits über einen Versorgungsspeicher 136, in welchem ein vorbestimmter Überdruck aufgebaut werden kann, an einen Druckausgang D einer Pumpe 138, verbunden mit einem Pumpenantrieb 139 in Form eines Elektromotors, angeschlossen ist. Ein erster Sauganschluss S1 der Pumpe 138 ist mit einer Druckquelle 152 und ein zweiter Sauganschluss S2 mit einem Stellglied 145 verbunden. Das Stellglied 145 ist entweder über ein Stellglied 146 mit der Fluidleitung 102 oder über ein Stellglied 147 mit der Fluidleitung 103 verbunden. Alternativ können die Stellglieder 146 und 147 aber auch mittels eines Stellgliedes 148 an einen Niederdruckspeicher 132 angeschlossen sein, der über ein Stellglied 149 mit dem zweiten Sauganschluss S2 der Pumpe 138 verbunden ist. Sämtliche Stellglieder 142 bis 149 sowie der Pumpenantrieb 139 und ein Sensor 150, der am Fluidverdränger 20 zur Anzeige von dessen Relativauslenkstellung in Bezug zur Fluidaufnahmekammer 20 befestigt ist, sind an einer Steuerungs- und/oder Regelungsvorrichtung 129, nachfolgend kurz als Regelung 129 bezeichnet, angeschlossen. Während die Regelung 129 vom Sensor 150 Signale aufnimmt, bestimmt sie durch Signalausgaben die Betriebsweise des Pumpenantriebes 139 sowie die Schaltpositionen von Elektromagneten der Stellglieder 142 bis 149. Hierbei wird durch die Stellglieder 142 und 144 eine erste Stellgliedgruppe 122, durch die Stellglieder 143 und 144 eine zweite Stellgliedgruppe 123, durch die Stellglieder 145 und 146 eine dritte Stellgliedgruppe 124 und durch die Stellglieder 145 und 147 eine vierte Stellgliedgruppe 124 gebildet.

Bei der nachfolgenden Beschreibung der Funktionsweise des Gasfedersystems 14 in Verbindung mit dem Druckkreis 120 wird für die einem Zugbetrieb zugeordneten Bauteile des Gasfedersystems 14 der Index "a" zur jeweiligen Bezugsziffer ergänzt, für die einem Schubbetrieb zugeordneten Bauteile des Gasfedersystems 14 dagegen der Index "b". In gleicher Weise sind die Bauteile des Gasfedersystems 14 in Fig. 8 bezeichnet, wobei das Gasfedersystem 14 in dieser Figur lediglich schematisch dargestellt ist.

Bei Zugbetrieb wird das antriebsseitige Übertragungselement 88 und damit die Fluidaufnahmekammer 18 in einer Richtung ausgelenkt, in welcher auf den Fluidverdränger 20 eine Kraft einwirkt, die in Fig. 8 durch einen Pfeil mit der Bezeichnung Z angegeben ist. Hierdurch wird das im Druckraum 27a enthaltene viskose Medium in Richtung zum Speicherraum 32a verlagert, und verschiebt dabei den Trennkolben 30a in Richtung zur Trennwand 36. Das im Speicherraum 32a enthaltene gasförmige Medium wird hierdurch verdichtet, das eingeleitete Drehmoment abgefedert. Umgekehrt wird bei Schubbetrieb das abtriebsseitige Übertragungselement 92 und damit der Fluidverdränger 20 in einer Richtung ausgelenkt, in welcher auf den Fluidverdränger 20 eine Kraft einwirkt, die in Fig. 8 durch einen Pfeil mit der Bezeichnung S angegeben ist. Hierdurch wird das im Druckraum 27b enthaltene viskose Medium in Richtung zum Speicherraum 32b verlagert, und verschiebt dabei den Trennkolben 30b in Richtung zur Trennwand 36. Das im Speicherraum 32b enthaltene gasförmige Medium wird hierdurch verdichtet, das eingeleitete Drehmoment abgefedert.

Zur Druckerhöhung im Druckraum 27a werden die Stellglieder 142 und 144 der ersten Stellgliedgruppe 122 durch die Regelung 129 auf Durchlass gestellt, so dass im Versorgungsspeicher 136 angesammeltes viskoses Medium in den Druckraum 27a geleitet wird, und hierdurch den Trennkolben 30a in Richtung zur Trennwand 36 verlagert. Hierdurch steigt der Druck auch im Speicherraum 32a, so dass sich der Effekt einer höheren Federsteifigkeit ergibt. In dieser Phase sind die Stellglieder 145 und 146 der dritten Stellgliedgruppe 124 in ihre Sperrposition gestellt, in welcher ein Durchlass viskosen Mediums verhindert ist. Bereits während dieses Vorganges kann die Pumpe 138 durch Aufnahme frischen viskosen Mediums über ihren ersten Sauganschluss S1 aus der Druckquelle 152 eine Wiederbefüllung des Versorgungsspeichers 136 sicherstellen.

Für eine Druckabsenkung im Druckraum 27a werden dagegen die Stellglieder 142 und 144 der ersten Stellgliedgruppe 122 in ihre Sperrstellung bewegt, die Stellglieder 145 und 146 der dritten Stellgliedgruppe 124 dagegen auf Durchlass gestellt. Auf diese Weise kann viskoses Medium aus dem Druckraum 27a über die dritte Stellgliedgruppe 124 und den zweiten Sauganschluss S2 abgesaugt werden, um durch die Pumpe 138 dem Versorgungsspeicher 136 und/oder der Druckquelle 152 zugeleitet zu werden. Alternativ kann allerdings das viskose Medium auch über die Stellglieder 146 und 148 in den Niederdruckspeicher 132 und von dort über das Stellglied 149 dem zweiten Sauganschluss S2 der Pumpe 138 zugeleitet werden, wo es abgesaugt wird. Durch den Niederdruckspeicher 132 kann das Absaugen des viskosen Mediums aus dem Druckraum 27a beschleunigt werden. Durch diese Maßnahme wird der Druck im Speicherraum 32a abgesenkt, so dass sich der Effekt einer geringeren Federsteifigkeit ergibt.

Zur Druckerhöhung im Druckraum 27b werden die Stellglieder 143 und 144 der zweiten Stellgliedgruppe 123 durch die Regelung 129 auf Durchlass gestellt, so dass im Versorgungsspeicher 136 angesammeltes viskoses Medium in den Druckraum 27b geleitet wird, und hierdurch den Trennkolben 30b in Richtung zur Trennwand 36 verlagert. Hierdurch steigt der Druck auch im Speicherraum 32b, so dass sich der Effekt einer höheren Federsteifigkeit ergibt. In dieser Phase sind die Stellglieder 145 und 147 der vierten Stellgliedgruppe 125 in ihre Sperrposition gestellt, in welcher ein Durchlass viskosen Mediums verhindert ist. Bereits während dieses Vorganges kann die Pumpe 138 durch Aufnahme frischen viskosen Mediums über ihren ersten Sauganschluss S1 aus der Druckquelle 152 eine Wiederbefüllung des Versorgungsspeichers 136 sicherstellen.

Für eine Druckabsenkung im Druckraum 27b werden dagegen die Stellglieder 143 und 145 der zweiten Stellgliedgruppe 123 in ihre Sperrstellung bewegt, die Stellglieder 145 und 147 der vierten Stellgliedgruppe 125 dagegen auf Durchlass gestellt. Auf diese Weise kann viskoses Medium aus dem Druckraum 27b über die vierte Stellgliedgruppe 125 und den zweiten Sauganschluss S2 abgesaugt werden, um durch die Pumpe 138 dem Versorgungsspeicher 136 und/oder der Druckquelle 152 zugeleitet zu werden. Alternativ kann allerdings das viskose Medium auch über die Stellglieder 146 und 148 in den Niederdruckspeicher 132 und von dort über das Stellglied 149 dem zweiten Sauganschluss S2 der Pumpe 138 zugeleitet werden, wo es abgesaugt wird. Durch den Niederdruckspeicher 132 kann das Absaugen des viskosen Mediums aus dem Druckraum 27b über die vierte Stellgliedgruppe 125 beschleunigt werden. Durch diese Maßnahme wird der Druck im Speicherraum 32b abgesenkt, so dass sich der Effekt einer geringeren Federsteifigkeit ergibt.

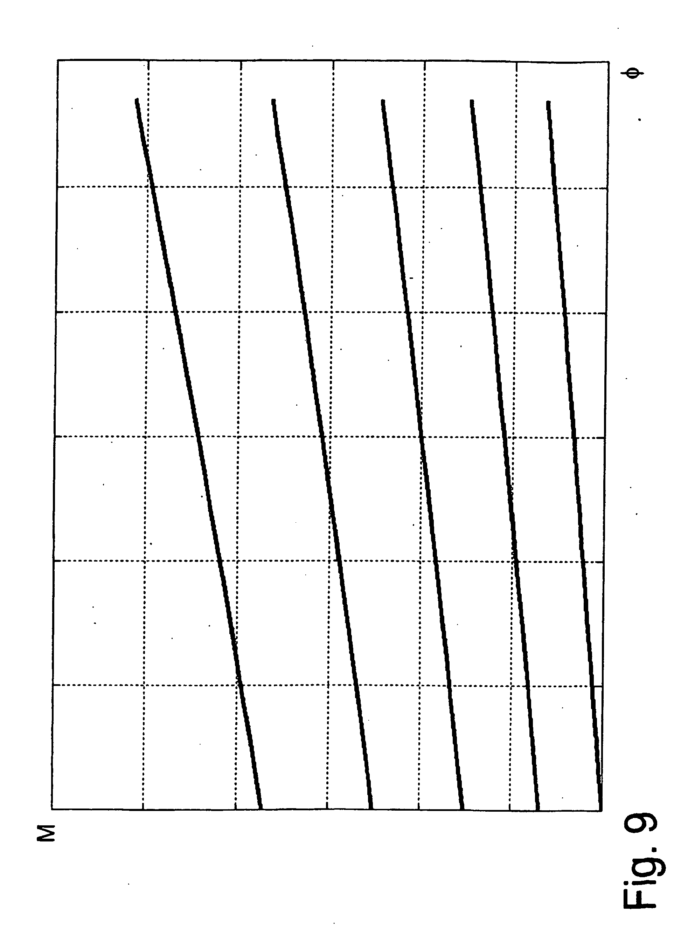

Über eine der Fluidleitungen 102 oder 103 der Zuleitung 100 des Druckkreises 120 eingeleitetes fluidförmiges Medium wird nach Durchströmung der ersten Drehdurchführung 98 (Fig. 4) in den Strömungskanälen 50, 51 der integrierten Druckleitung 108 des Abtriebs 86 zur zweiten Drehdurchführung 114 weitergeleitet, um von dieser über die Fluidleitungen 38, 39 (Fig. 7) der Zuleitung 34 in das Federsystem 14 zu gelangen. Je höher hierbei der Druck infolge des eingeleiteten fluidförmigen Mediums im Druckraum 27 ansteigt, umso mehr erhöht sich durch Verlagerung des Trennkolbens 30 (Fig. 5) in Richtung zur Trennwand 36 auch der Druck des gasförmigen Mediums im Speicherraum 32 des Federsystems 14 und damit auch die Momentenübertragbarkeit dieses Federsystems 14. Auf diese Weise wird eine Anpassung der in Fig. 9 dargestellten jeweiligen Kennlinie des Federsystems 14 an die zugeordnete Momentengröße des zu übertragenden Drehmomentes vorgenommen. Bedingt durch diese Anpassung ist jeweils die dem gerade vorliegenden Lastzustand optimal zugeordnete Kennlinie realisiert, so dass jeweils praktisch der gesamte Federweg, welchen das Federsystem 14 bei dieser Kennlinie zu bieten vermag, für die Dämpfung eventueller lastwechselbedingter Torsionsschwingungen zur Verfügung steht. Selbstverständlich kann eine weitere Belastungszunahme durch noch höheren Druck im Druckraum 27 und daher im Speicherraum 32 und somit die Realisierung einer nochmals höheren Kennlinie ausgeglichen werden, eine Belastungsabnahme dagegen durch eine Druckabsenkung im Druckraum 27 und daher im Speicherraum 32, was zur Realisierung einer niedrigeren Kennlinie führt. Es bleibt zu ergänzen, dass die Fig. 9 die Kennlinien in Abhängigkeit vom jeweiligen Drehmoment M, bezogen auf den durch das Federsystem 14 bereitgestellten Auslenkwinkel φ, darstellt. Der Übergang zwischen den einzelnen Kennlinien kann durch vorbestimmbar große Stufen oder aber zumindest im wesentlichen kontinuierlich erfolgen.

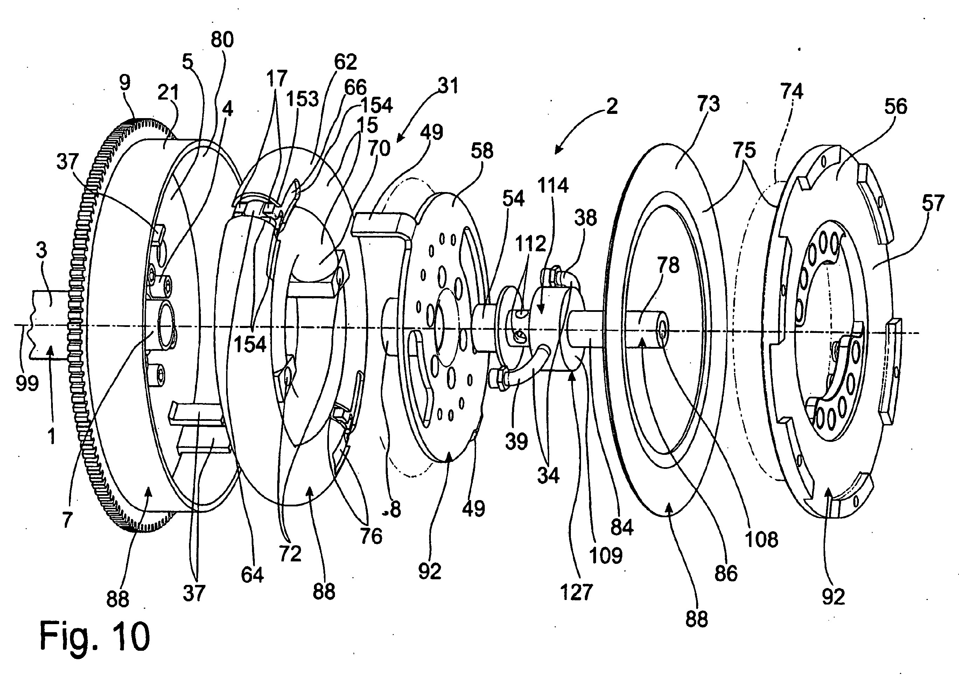

Die Fig. 10 und 11 sowie 16 und 17 zeigen eine andere Ausführung des Torsionsschwingungsdämpfers 2. Auch bei dieser Ausführung ist der Torsionsschwingungsdämpfer 2, wie am besten aus Fig. 10 hervorgeht, am Antrieb 1, mit Vorzug durch eine Kurbelwelle 3 einer Brennkraftmaschine gebildet, mittels Verbindungselementen 4 befestigt. Die Verbindungselemente 4 durchgreifen den Radialflansch 5, der zusammen mit einem Axialansatz 21 und einem Deckelement 73 einen Aufnahmeraum 80 für die Federsysteme 14 bildet. Der Radialflansch 5 weist im radial inneren Bereich die Primärnabe 7 auf, die über eine Lagerung 54 den Ansteuerelemententräger 58 über eine Sekundärnabe 8 desselben zentriert und axial positioniert.

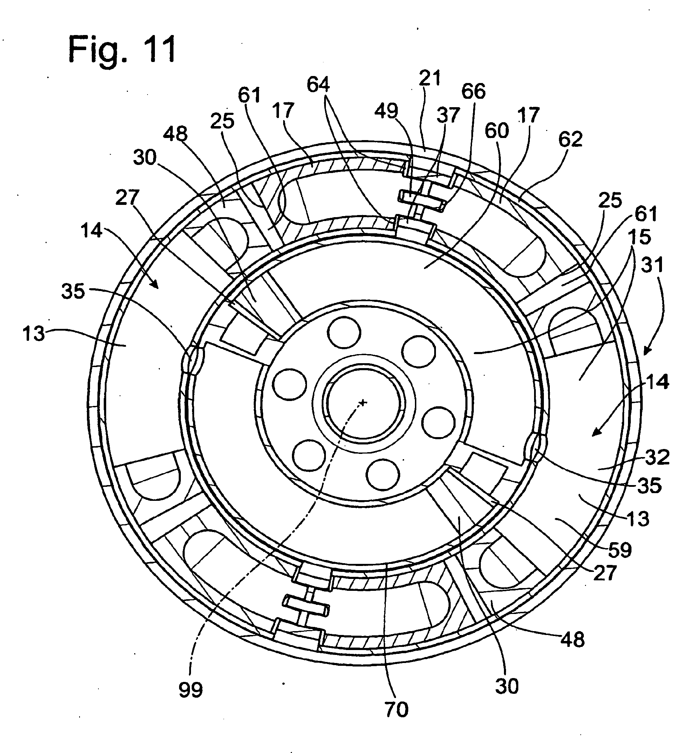

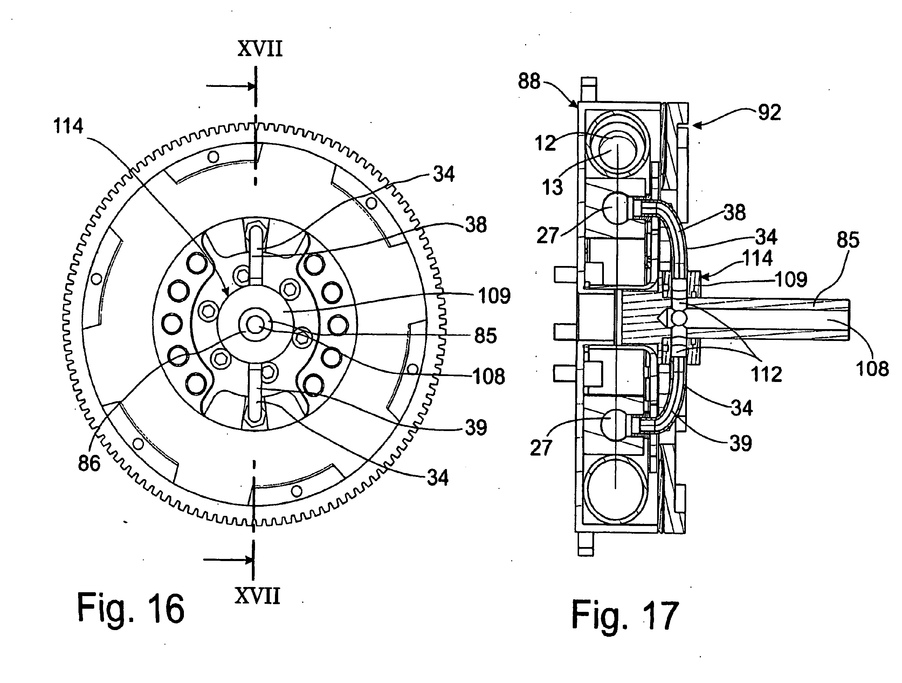

Vom Aufnahmeraum 80 umschlossen ist eine mit dem Radialflansch 5 drehfeste Zylinderaufnahme 15, die zur Aufnahme zweier Federsysteme 14 über eine radial äußere, im wesentlichen ringförmige Aufnahmeschale 62 und eine radial innere, ebenfalls im wesentlichen ringförmige Zusatzaufnahmeschale 70 verfügt. Wie Fig. 11 im einzelnen zeigt, weist jedes Federsystem 14 einen Zylinder 12 auf, der über einen Zylinderraum 13 mit im wesentlichen kreisförmigen Querschnitt (Fig. 17) verfügt. In dem Zylinderraum 13 sind, wie Fig. 11 am deutlichsten zeigt, jeweils in Umfangsrichtung endseitig, Steuerkolben 17 in Umfangsrichtung verlagerbar angeordnet, die jeweils aus einem Hohlrohr 78 bestehen, das an seinem einem Speicherraum 32 zugewandten Ende mit einem Kolbenstempel 25 versehen ist, wobei dieses Hohlrohr 78 mit einer vorbestimmten Krümmung um die Drehachse 99 des Torsionsschwingungsdämpfers 2 ausgebildet ist. Aufgrund dieser Krümmung ist der jeweilige Steuerkolben 17 in Umfangsrichtung in dem mit gleicher Krümmung ausgebildeten Zylinderraum 13 in Umfangsrichtung verlagerbar, sobald mittels am Radialflansch 5 vorgesehener antriebsseitiger Ansteuerelemente 37 eine Umfangsbeaufschlagung des jeweiligen Steuerkolbens 17 erfolgt. Hierzu ragen die antriebsseitigen Ansteuerelemente 37 über erste Durchgriffsöffnungen 64 in die Aufnahmeschale 62. Die Beaufschlagung der Steuerkolben 17 durch die antriebsseitigen Ansteuerelemente 37 erfolgt an der vom Kolbenstempel 25 abgewandten Seite des jeweiligen Steuerkolbens 17.

In der Aufnahmeschale 62 sind, mit Radialversatz gegenüber den ersten Durchgriffsöffnungen 64, zweite Durchgriffsöffnungen 66 vorgesehen, die in Umfangsrichtung eine andere Erstreckungsweite, im vorliegenden Fall eine größere Erstreckungsweite, gegenüber den ersten Durchgriffsöffnungen 64 aufweisen. Somit liegen auch die jeweiligen umfangsseitigen Enden 153, 154 der beiden Durchgriffsöffnungen 64, 66 in unterschiedlichen Umfangsbereichen der Aufnahmeschale 62. Die zweiten Durchgriffsöffnungen 66 sind von abtriebsseitigen Ansteuerelementen 49 durchgriffen, wobei die letztgenannten an dem Ansteuerelemententräger 58 vorgesehen sind. Aufgrund des jeweils vorgegebenen Umfangsspiels zwischen dem jeweiligen Ansteuerelement 37, 49 und den umfangsseitigen Enden 153, 154 der jeweils zugeordneten Durchgriffsöffnung 64, 66 sind die Relativdrehauslenkungen zwischen der antriebsseitigen Zylinderaufnahme 15 und damit des antriebsseitigen Übertragungselementes 88 gegenüber dem abtriebsseitigen Ansteuerelemententräger 58 und damit dem abtriebsseitigen Übertragungselement 92 vorgegeben, so dass die umfangsseitigen Enden 154, 154 der Durchgriffsöffnungen 64, 66 als Anschläge zwischen den Übertragungselementen 88, 92 wirksam sind.

Benachbart zum Kolbenstempel 25 des jeweiligen Steuerkolbens 17 schließt sich je eine mit viskosem Medium befüllte Dichtkammer 61 und je ein Zusatztrennkolben 48 an, dessen von der Dichtkammer 61 abgewandte Seite an einen für beide Steuerkolben 17 gemeinsamen Hauptspeicherraumanteil 59 eines Speicherraumes 32 angrenzt. Dieser Hauptspeicherraumanteil 59 ist mittels einer Steuerraumpassage 35 mit einem Zusatzspeicherraumanteil 60 verbunden, der gemeinsam mit einem Trennkolben 30 und einem Druckraum 27 in der Zusatzaufnahmeschale 70 enthalten ist. Der Trennkolben 30 dient dabei, wie bereits beschrieben, zur Isolation des mit viskosem Medium befüllten Druckraumes 27 gegenüber dem mit gasförmigem Medium befüllten Speicherraum 32. Die gleiche Aufgabe kommt auch dem Zusatztrennkolben 48 zu. Die Dichtkammer 62 liefert hierbei das die Abdichtung des Speicherraums 32 gegenüber der Umgebung des Torsionsschwingungsdämpfers 2 unterstützende viskose Medium, das zudem als Schmiermittel für den Zusatztrennkolben 48, insbesondere aber auch für den jeweiligen Steuerkolben 17 zur Verfügung steht.

Wie Fig. 16 und 17 im Einzelnen zeigen, ist an einen Druckraum 27 der Zylinderaufnahme 15 eine Fluidleitung 38 und an den anderen Druckraum 27 der Zylinderaufnahme 15 eine Fluidleitung 39 angeschlossen. Diese beiden Fluidleitungen 38, 39 dienen als Zuleitung 34, und sind mit ihren vom Druckraum 27 abgewandten Enden an das als Verteiler für das fluidförmige Medium dienende zweite Druckkreis-Bauteil 109 angeschlossen. Dieses weist Radialdurchgänge 112 auf, welche zu einer im Druckleitelement 85 verlaufenden integrierten Druckleitung 108 führen, wobei das Druckleitelement 85 hier durch den Abtrieb 86 gebildet ist. Während durch das zweite Druckkreisbauteil 109 in Verbindung mit dem Druckleitelement 85 eine zweite Drehdurchführung 114 gebildet wird, ist die erste Drehdurchführung hier nicht gezeigt, soll aber bezüglich räumlicher Anordnung gegenüber dem Torsionsschwingungsdämpfer 2 sowie bezüglich der Verbindung mit dem externen Druckkreisanteil 121 des Druckkreises 120 identisch zu der anhand von Fig. 4 und 8 behandelten ersten Drehdurchführung 98 sein.

Bei dieser Ausführung des Federsystems 14 erfolgt die Beaufschlagung des einen Steuerkolbens 17 jedes Zylinders 12 durch die antriebsseitigen Ansteuerelemente 37 bei Zugbetrieb, des jeweils anderen Steuerkolbens 17 dieses Zylinders 12 dagegen bei Schubbetrieb.

Bei Torsionsschwingungen im Zugbetrieb wird das antriebsseitige Übertragungselement 88 und damit der entsprechende Steuerkolben 17, beispielsweise der in Fig. 11 oben eingezeichnete Steuerkolben 17 des rechts dargestellten Zylinders 12, durch die antriebsseitigen Ansteuerelemente 37 tiefer in den Zylinderraum 13 geschoben, und verdichtet dadurch das im Speicherraum 32 enthaltene gasförmige Medium, bis es zu einem Gleichgewicht zwischen dem eingeleiteten Drehmoment und dem Druck im Speicherraum 32 kommt. Umgekehrt wird bei Torsionsschwingungen im Schubbetrieb das abtriebsseitige Übertragungselement 92 und damit der entsprechende Steuerkolben 17, jetzt also der in Fig. 11 unten eingezeichnete Steuerkolben 17 des rechts dargestellten Zylinders 12, durch die abtriebsseitigen Ansteuerelemente 49 tiefer in den Zylinderraum 13 geschoben, und verdichtet dadurch wiederum das im Speicherraum 32 enthaltene gasförmige Medium, bis es zu einem Gleichgewicht zwischen dem eingeleiteten Drehmoment und dem Druck im Speicherraum 32 kommt.

Da der in Fig. 11 linke Zylinder 12 der Zylinderaufnahme 15 vergleichbar mit dem zuvor beschriebenen Zylinder 12 wirksam ist, erscheint eine nochmalige Erläuterung nicht erforderlich.

Zur Druckerhöhung im Druckraum 27 wird über die nicht gezeigte erste Drehdurchführung sowie über die zweite Drehdurchführung 114 viskoses Medium in den Druckraum 27 zugeführt, zur Druckabsenkung jeweils entnommen. Damit übernimmt bei dieser Ausführung des Torsionsschwingungsdämpfers 2 die Zuleitung 34 in Verbindung mit dem in Fig. 8 gezeigten Druckkreis 120 die Funktion der Druckvorgabeeinrichtung 127. Durch Druckerhöhung im Druckraum 27 und damit im Speicherraum 32 ergibt sich der Effekt einer höheren Federvorspannung sowie einer höheren Federsteifigkeit, durch Druckabsenkung im Druckraum dagegen der Effekt einer geringeren Federvorspannung sowie einer geringeren Federsteifigkeit. Auf diese Weise wird eine Anpassung der in Fig. 9 dargestellten jeweiligen Kennlinie des Federsystems 14 an die zugeordnete Momentengröße des zu übertragenden Drehmomentes vorgenommen. Bedingt durch diese Anpassung ist jeweils die dem gerade vorliegenden Lastzustand optimal zugeordnete Kennlinie realisiert, so dass jeweils praktisch der gesamte Federweg, welchen das Federsystem 14 bei dieser Kennlinie zu bieten vermag, für die Dämpfung eventueller lastwechselbedingter Torsionsschwingungen zur Verfügung steht. Selbstverständlich kann eine weitere Belastungszunahme durch noch höheren Druck im Druckraum 27 und daher im Speicherraum 32 und somit die Realisierung einer nochmals höheren Kennlinie ausgeglichen werden, eine Belastungsabnahme dagegen durch eine Druckabsenkung im Druckraum 27 und daher im Speicherraum 32, was zur Realisierung einer niedrigeren Kennlinie führt. Auch hier kann der Übergang zwischen den einzelnen Kennlinien durch vorbestimmbar große Stufen oder aber zumindest im wesentlichen kontinuierlich erfolgen.

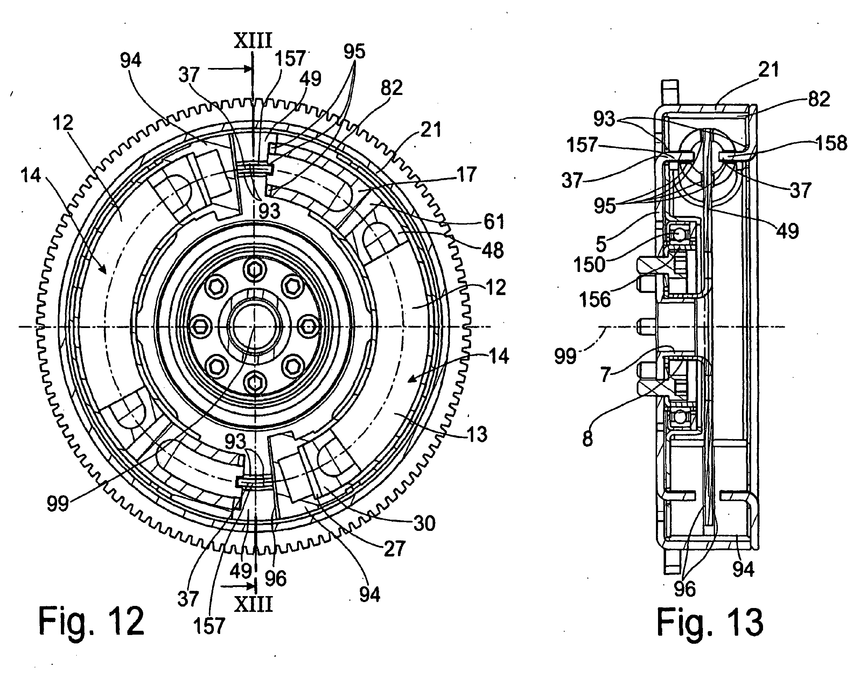

In den Fig. 12 und 13 ist eine weitere Ausführung des Torsionsschwingungsdämpfers 2 dargestellt. Da gegenüber der Ausführung nach Fig. 10 und 11 pro Zylinder 12 ein Steuerkolben 17 sowie der zugeordnete Zusatztrennkolben 48 bei gleicher Funktionalität eingespart ist, müssen die Zylinder 12 gegenüber der Kolbenaufnahme 15 und somit gegenüber dem diese Kolbenaufnahme 15 drehfest haltenden Übertragungselement, im vorliegenden Fall des antriebsseitigen Übertragungselementes 88, relativ bewegbar sein. Zu diesem Zweck ist der jeweilige Zylinder 12 in einer Tragvorrichtung 82 aufgenommen, die mittels einer Lagerung 155 (Fig. 13), im vorliegenden Fall mittels einer Wälzlagerung, auf einem mit dem Radialflansch 5 drehfesten Tragering 156 des antriebsseitigen Übertragungselementes 88 zentriert und axial positioniert, aber zu einer Relativdrehbewegung um die Drehachse 99 befähigt ist. Auch gegenüber dem abtriebsseitigen Übertragungselement 92 besteht Relativdrehbewegbarkeit, wobei das abtriebsseitige Übertragungselement 92 mittels seiner Sekundämabe 8 auf der Primärnabe 7 des antriebsseitigen Übertragungselementes 88 drehbar angeordnet ist.

Sowohl am Radialflansch 5 als auch an dem mit demselben drehfesten Deckelement 73 sind jeweils Umbiegungen 157, 158 vorgesehen, die als antriebsseitige Ansteuerelemente 37 dienen und mit ihren freien Enden in Durchgriffe 93 der Tragvorrichtung 82 ragen, um den benachbarten Steuerkolben 17 zu beaufschlagen, und diesen, beispielsweise bei Zugbetrieb, tiefer in den Zylinderraum 13 hinein zu verlagern. Für Auslenkungen des Federsystems 14 in Gegendrehrichtung, also bei Schubbetrieb, wird der gesamte Zylinder 12 verlagert, und zwar über das abtriebsseitige Ansteuerelement 49, das auf ein Zentriersegment 94 des jeweiligen Zylinders 12 einwirkt. Die Eingriffssicherheit des jeweiligen Ansteuerelementes 37, 49 wird verbessert, wenn es mit je einer zugeordneten Nutung zusammenwirkt, wobei dem antriebsseitigen Ansteuerelement 37 jeweils eine erste Nutung 95 und dem abtriebsseitigen Ansteuerelement 45 jeweils eine zweite Nutung 96 zugeordnet ist.

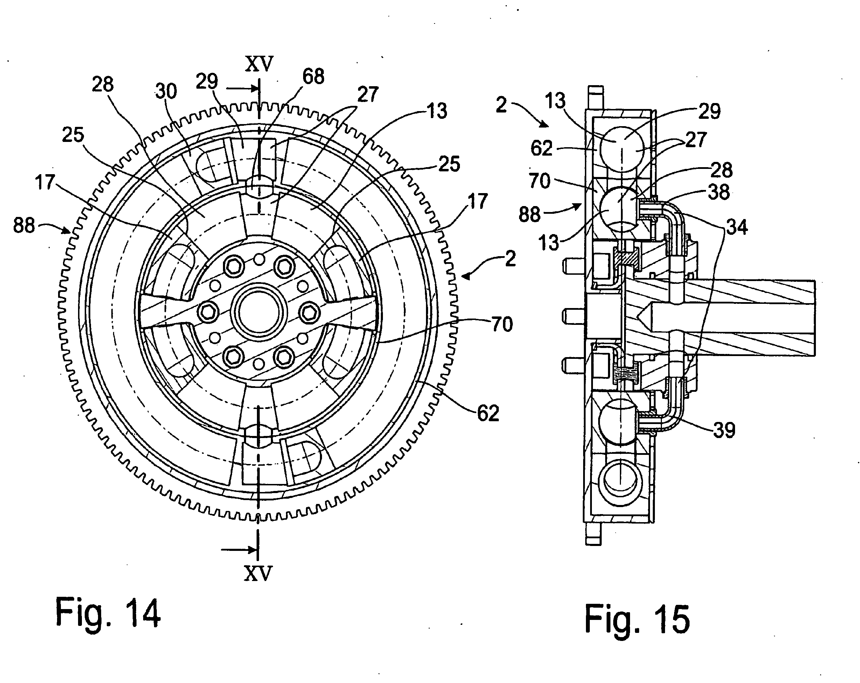

Die Fig. 14 und 15 zeigen wieder eine Ausführung des Torsionsschwingungsdämpfers 2, bei welcher die Zylinderaufnahme 15 einen drehfesten Bestandteil des antriebsseitigen Übertragungselementes 88 bildet. Die Zylinderaufnahme 15 verfügt über eine Aufnahmeschale 62 sowie über eine Zusatzaufnahmeschale 70, wobei beide Aufnahmeschalen 62 und 70 radial zueinander vorgesehen sind. Während die Zusatzaufnahmeschale 70 an den umfangsseitigen Enden ihres Zylinderraumes 13 je einen Steuerkolben 17 aufnimmt, und als Hauptdruckraumanteil 28 des Druckraumes 27 dient, ist in der Aufnahmeschale 62 der Zusatzdruckraumanteil 29 des Druckraumes 27 sowie ein Trennkolben 30 vorgesehen. Bei dieser Ausführung erfolgt also die Ansteuerung des Federsystems 14 ausschließlich hydraulisch, und es ist jeder der beiden Zylinder 12 der Zylinderaufnahme 15 für lediglich eine Drehrichtung, also für Zug- oder Schubbetrieb, wirksam.

### Bezugszeichenliste

- 1: Antrieb
- 2: Torsionsschwingungsdämpfer
- 3: Kurbelwelle
- 4: Verbindungselemente
- 5: Radialflansch
- 6: Ausnehmungen
- 7: Primärnabe
- 8: Sekundärnabe
- 9: Zahnkranz
- 12: Zylinder
- 13: Zylinderraum
- 14 .: Federsystem
- 15: Zylinderaufnahme
- 17: Steuerkolben
- 18: Fluidaufnehmer
- 20: Fluidverdränger
- 21: Axialansatz
- 22: Abdichtung
- 23: Fluidverdrängungselement
- 24: Fluidstauelement
- 25: Kolbenstempel
- 27: Druckraum
- 28: Hauptdruckraumanteil
- 29: Zusatzdruckraumanteil
- 30: Trennkolben
- 31: Dämpfungseinrichtung
- 32: Speicherraum
- 33: Speicherraumanschluss
- 34: Zuleitung
- 35: Speicherraumpassagen
- 36: Trennwand
- 37: antriebsseitiges Ansteuerelement
- 38: Fluidleitung
- 39: Fluidleitung
- 42: Umfangsring
- 44: Abschlußdeckel
- 46: Aufnahmering
- 48: Zusatztrennkolben
- 49: abtriebsseitiges Ansteuerelement
- 50: Strömungskanal
- 51: Strömungskanal
- 54: Lagerung
- 56: abtriebsseitige Schwungmasse
- 57: Reibfläche
- 58: Ansteuerelemententräger
- 59: Hauptspeicherraumanteil
- 60: Zusatzspeicherraumanteil
- 61: Dichtkammer
- 62: Aufnahmeschale
- 64: erste Durchgriffsöffnungen
- 66: zweite Durchgriffsöffnungen
- 68: Druckraumpassage
- 70: Zusatzaufnahmeschale
- 72: Druckraumanschluss
- 73: Deckelement
- 74: Axialenergiespeicher
- 75: Abstützfläche
- 76: Drehwinkelbegrenzung
- 78: Hohlrohr
- 80: Aufnahmeraum
- 82: Tragvorrichtung
- 84: Getriebeeingangswelle
- 85: Druckleitelement
- 86: Abtrieb
- 88: antriebsseitiges Übertragungselement
- 92: abtriebsseitiges Übertragungselement
- 93: Durchgriffe
- 94: Zentriersegment
- 95: erste Nutung
- 96: zweite Nutung
- 98: erste Drehdurchführung
- 99: Drehachse
- 100: Zuleitung
- 101: erstes Druckkreis-Bauteil
- 102: Fluidleitung
- 103: Fluidleitung
- 106: Radialdurchgang
- 108: integrierte Druckleitung
- 109: zweites Druckkreisbauteil
- 112: Radialdurchgang
- 114: zweite Drehdurchführung
- 120: Druckkreis
- 121: externer Druckkreisanteil
- 122: erste Stellgliedgruppe
- 123: zweite Stellgliedgruppe
- 124: dritte Stellgliedgruppe
- 125: vierte Stellgliedgruppe
- 127: Druckvorgabeeinrichtung
- 129: Steuerungs- und/oder Regelungsvorrichtung
- 132: Niederdruckspeicher
- 136: Versorgungsspeicher
- 138: Pumpe
- 139: Pumpenantrieb
- 142, 143: Stellglied
- 144, 145: Stellglied
- 146, 147: Stellglied
- 148, 149: Stellglied
- 150: Sensor
- 152: Druckquelle
- 153: umfangsseitiges Ende
- 154: umfangsseitiges Ende
- 155: Lagerung
- 156: Trägheitsring
- 157: Umbiegung
- 158: Umbiegung

## Patentansprüche

1. Torsionsschwingungsdämpfer, aufweisend ein mit einem Antrieb (1) verbundenes antriebsseitiges Übertragungselement (88), ein mit einem Abtrieb (86) in Wirkverbindung bringbares, gegenüber dem antriebsseitigen Übertragungselement (88) drehauslenkbares abtriebsseitiges Übertragungselement (92) und eine zwischen den beiden Übertragungselementen (88, 92) vorgesehene Dämpfungseinrichtung (31) mit einem Federsystem (14), das zur Übertragung eines Drehmomentes zwischen dem antriebsseitigen und dem abtriebsseitigen Übertragungselement dient und mindestens über einen Speicherraum (32) mit gasförmigem Medium verfügt,
**dadurch gekennzeichnet,**
**dass** der jeweilige Speicherraum (32) des Federsystems (14) mit einem jeweils zugeordneten, ein fluidförmiges Medium enthaltenden Druckraum (27) eines Druckkreises (120) in Wirkverbindung steht, wobei durch den Druckkreis (120) wenigstens bei einer Änderung des zu übertragenden Drehmomentes mittels einer Neueinstellung des im jeweiligen Druckraum (27) anliegenden Druckes zumindest im Wesentlichen eine Anpassung der Kennlinie des Federsystems (14) an das geänderte Drehmoment auslösbar ist, indem der jeweilige Druckraum (27) über einen Druckraumanschluss (72) zur Anpassung des im Druckraum (27) enthaltenen, durch das fluidförmige Medium erzeugten Druckes verfügt.

2. Torsionsschwingungsdämpfer nach Anspruch 1,
**dadurch gekennzeichnet,**
**dass** der jeweilige Druckraum (27) durch wenigstens ein Übertragungselement (88) aufgenommen ist, während ein externer Druckkreisanteil (121) außerhalb der Übertragungselemente (88, 92) vorgesehen ist.

3. Torsionsschwingungsdämpfer nach Anspruch 1,
**dadurch gekennzeichnet,**
**dass** der externe Druckkreisanteil (121) über wenigstens eine Drehdurchführung (98, 114) mit relativ zueinander bewegbaren Druckkreis-Bauteilen (101, 85; 109, 85) mit dem jeweiligen Druckraum (27) in Druckverbindung steht.

4. Torsionsschwingungsdämpfer nach Anspruch 3,
**dadurch gekennzeichnet,**
**dass** der externe Druckkreisanteil (121) über zumindest eine Pumpe (138) verfügt, die über eine Zuleitung (100) und die erste Drehdurchführung (98) mit einem Druckleitelement (85) in Druckverbindung steht, und dass das Druckleitelement (85) über die zweite Drehdurchführung (114) mit wenigstens einer in den jeweiligen Druckraum (27) führenden Zuleitung (34) druckverbunden ist.

5. Torsionsschwingungsdämpfer nach Anspruch 4,
**dadurch gekennzeichnet,**
**dass** das Druckleitelement (85) über eine integrierte Druckleitung (108) als Druckverbindung zwischen den beiden Drehdurchführungen (98, 114) verfügt.

6. Torsionsschwingungsdämpfer nach Anspruch 4 oder 5,
**dadurch gekennzeichnet,**
**dass** das Druckleitelement (85) durch den Abtrieb (86) gebildet wird.

7. Torsionsschwingungsdämpfer nach Anspruch 4,
**dadurch gekennzeichnet,**
**dass** die vom Druckleitelement (85) über die zweite Drehdurchführung (114) in den jeweiligen Druckraum (27) führende Zuleitung (34) über bezüglich ihrer Anzahl von der Menge an Druckräumen (27) abhängige Fluidleitungen (38, 39) verfügt.

8. Torsionsschwingungsdämpfer nach Anspruch 4,
**dadurch gekennzeichnet,**
**dass** die vom Druckleitelement (85) über die erste Drehdurchführung (98) zur Pumpe (138) führende Zuleitung (100) über bezüglich ihrer Anzahl von der Menge an Druckräumen (27) abhängige Fluidleitungen (102, 103) verfügt.

9. Torsionsschwingungsdämpfer nach den Ansprüchen 2 und 4,
**dadurch gekennzeichnet,**
**dass** die erste Drehdurchführung (98) über ein Druckkreis-Bauteil (101) verfügt, das Teil des externen Druckkreisanteiles (121) ist.

10. Torsionsschwingungsdämpfer nach Anspruch 4,
**dadurch gekennzeichnet,**
**dass** die zweite Drehdurchführung (114) über ein Druckkreis-Bauteil (109) verfügt, das Teil des den Druckraum (27) aufnehmenden Übertragungselementes (92) ist.

11. Torsionsschwingungsdämpfer nach Anspruch 1,
**dadurch gekennzeichnet,**
**dass** der Druckraum (27) des Druckkreises (120) über zumindest einen Trennkolben (30) mit dem jeweiligen Speicherraum (32) des Federsystems (14) in Druckverbindung steht.

12. Torsionsschwingungsdämpfer nach Anspruch 11,
**dadurch gekennzeichnet,**
**dass** der Trennkolben (30) in einem Zylinderraum (13) zumindest eines in einer Zylinderaufnahme (15) enthaltenen Zylinders (12) des jeweiligen Federsystems (14) in Erstreckungsrichtung des Zylinderraumes (13) verlagerbar angeordnet und mit einer Abdichtung (22) zusammenwirkend ist, durch welche ein Austausch des viskosen Mediums im Druckraum (27) und des gasförmigen Mediums im Speicherraum (32) zumindest begrenzt ist.

13. Torsionsschwingungsdämpfer nach Anspruch 1,
**dadurch gekennzeichnet,**
**dass** dem Federsystem (14) zur Vorgabe eines in dessen Speicherraum (32) herrschenden Druckes zumindest eine den Druck im entsprechenden Druckraum (27) einstellende Druckvorgabeeinrichtung (127) zugeordnet ist.

14. Torsionsschwingungsdämpfer nach Anspruch 12,
**dadurch gekennzeichnet,**
**dass** der Zylinderraum (13) ebenso wie der Druckraum (27) oder zumindest der Hauptdruckraumanteil (28) des Federsystems (14) in Umfangsrichtung im wesentlichen ringförmig ist.

15. Torsionsschwingungsdämpfer nach Anspruch 12,
**dadurch gekennzeichnet,**
**dass** der Zylinderraum (13) des Federsystems (14) ebenso wie der Druckraum (27) zumindest im wesentlichen im antriebsseitigen Übertragungselement (88) aufgenommen ist, während die den Druck im Druckraum (27) einstellende Druckvorgabeeinrichtung (127) zumindest im wesentlichen dem abtriebsseitigen Übertragungselement (92) zugeordnet ist.

16. Torsionsschwingungsdämpfer nach Anspruch 12,
**dadurch gekennzeichnet,**
**dass** die Dämpfungseinrichtung (31) für jede Drehauslenkrichtung eines Übertragungselementes (88, 92) über jeweils zumindest ein Federsystem (14) mit einem zumindest einen Speicherraum (32), einen Trennkolben (30) sowie einen Druckraum (27) aufweisenden Zylinder (12) verfügt, und die Federsysteme (14) der beiden Drehauslenkrichtungen einander entgegen wirken.

17. Torsionsschwingungsdämpfer nach Anspruch 14,
**dadurch gekennzeichnet,**
**dass** zumindest ein Teil der Federsysteme (14) der Dämpfungseinrichtung (31) über einen Druckraum (27) verfügt, der in einen Hauptdruckraumanteil (28) und in einen Zusatzdruckraumanteil (29) unterteilt ist, wobei die beiden Druckraumanteile (28, 29) durch zumindest eine Speicherraumpassage (35) miteinander in Druckverbindung stehen.

18. Torsionsschwingungsdämpfer nach den Ansprüchen 13 und 17,
**dadurch gekennzeichnet,**
**dass** zumindest der Hauptdruckraumanteil (28) des Druckraumes (27) durch einen Fluidaufnehmer (18) und einen gegenüber derselben relativ bewegbaren, als Druckvorgabeeinrichtung (127) dienender Fluidverdränger (20) begrenzt ist, wobei der letztgenannte über
zumindest ein als Steuerkolben (17) wirksames, sich in Richtung zum Fluidaufnehmer (18) erstreckendes Fluidverdrängungselement (23) und die Fluidaufnehmer (18) über zumindest ein sich in Richtung zum Fluidverdränger (20) erstreckendes und dem Fluidverdrängungselement (23) funktional zugeordnetes Fluidstauelement (24) verfügt.

19. Torsionsschwingungsdämpfer nach Anspruch 17,
**dadurch gekennzeichnet,**
**dass** der Zusatzdruckraumanteil (29) des Druckraumes (27) gemeinsam mit dem Speicherraum (32) und dem die beiden Räume (27, 32) voneinander isolierenden Trennkolben (30) im Zylinderraum (13) des jeweiligen Zylinders (12) des Federsystems (14) vorgesehen ist.

20. Torsionsschwingungsdämpfer nach Anspruch 18,
**dadurch gekennzeichnet,**
**dass** der Fluidaufnehmer (18) radial benachbart zur Zylinderaufnahme (15) angeordnet und ebenso wie die Zylinderaufnahme (15) drehfest mit einem Übertragungselement (88) ist, während der Fluidverdränger (20) an der von der Zylinderaufnahme (15) abgewandten Seite des Fluidaufnehmers (18) radial benachbart zu demselben vorgesehen und drehfest mit dem jeweils anderen Übertragungselement (92) ist.

21. Torsionsschwingungsdämpfer nach Anspruch 20,
**dadurch gekennzeichnet,**
**dass** der Fluidaufnehmer (18) ebenso wie die Zylinderaufnahme (15) drehfest am antriebsseitigen Übertragungselement (88) vorgesehen ist, während der Fluidverdränger (20) zur drehfesten Anbindung des abtriebsseitigen Übertragungselementes (92) dient.

22. Torsionsschwingungsdämpfer nach den Ansprüchen 7 und 18,
**dadurch gekennzeichnet,**
**dass** die vom Druckleitelement (85) über die zweite Drehdurchführung (114) in den jeweiligen Druckraum (27) führenden Fluidleitungen (38, 39) an dem Fluidverdränger (20) mittels Druckraumanschlüssen (72) bewegungsgesichert aufgenommen sind.

23. Torsionsschwingungsdämpfer nach Anspruch 18,
**dadurch gekennzeichnet,**
**dass** der Fluidaufnehmer (18) unmittelbar am Antrieb (1) befestigt ist und mittels einer Lagerung (54) eine Zentrierung sowie eine Axialsicherung des Fluidverdrängers (20) bewirkt.

24. Torsionsschwingungsdämpfer nach Anspruch 4,
**dadurch gekennzeichnet,**
**dass** der einer ersten Drehauslenkrichtung eines Übertragungselementes (88, 92) zugeordnete Druckraum (27) zur Druckerhöhung über eine erste Stellgliedgruppe (122) und der einer zweiten Drehauslenkrichtung dieses Übertragungselementes (88, 92) zugeordnete Druckraum (27) zur Druckerhöhung über eine zweite Stellgliedgruppe (123) mit der Pumpe (138) verbunden ist.

25. Torsionsschwingungsdämpfer nach Anspruch 24,
**dadurch gekennzeichnet,**
**dass** jede der beiden Stellgliedgruppen (122, 123) jeweils über einen Versorgungsspeicher (136) für viskoses Medium an die Pumpe (138) angeschlossen ist.

26. Torsionsschwingungsdämpfer nach Anspruch 25,
**dadurch gekennzeichnet,**
**dass** der Versorgungsspeicher (136) mit einer Druckseite (D) der Pumpe (138) in Druckverbindung versetzbar ist.

27. Torsionsschwingungsdämpfer nach Anspruch 24,
**dadurch gekennzeichnet,**
**dass** der einer ersten Drehauslenkrichtung eines Übertragungselementes (88, 92) zugeordnete Druckraum (27) zur Druckabsenkung über eine dritte Stellgliedgruppe (124) und der einer zweiten Drehauslenkrichtung dieses Übertragungselementes (88, 92) zugeordnete Druckraum (27) zur Druckabsenkung über eine vierte Stellgliedgruppe (125) mit der Pumpe (138) verbunden ist.

28. Torsionsschwingungsdämpfer nach Anspruch 27,
**dadurch gekennzeichnet,**
**dass** jede der beiden Stellgliedgruppen (124, 125) jeweils über einen Niederdruckspeicher (132) für viskoses Medium an die Pumpe (138) angeschlossen ist.

29. Torsionsschwingungsdämpfer nach Anspruch 28,
**dadurch gekennzeichnet,**
**dass** der Niederdruckspeicher (132) mit einer Saugseite (S2) der Pumpe (138) in Druckverbindung versetzbar ist.

30. Torsionsschwingungsdämpfer nach Anspruch 29,
**dadurch gekennzeichnet,**
**dass** eine weitere Saugseite (S1) der Pumpe (138) mit einem Druckmittelvorrat (152) in Druckverbindung versetzbar ist.

31. Torsionsschwingungsdämpfer nach Anspruch 27,
**dadurch gekennzeichnet,**
**dass** zumindest ein Stellglied (142 bis 149) der Stellgliedgruppen (122 bis 125) sowie ein Pumpenantrieb (139) der Pumpe (138) mit einer Steuerungs- und oder Regelungsvorrichtung (129) verbunden und durch diese bezüglich seiner jeweiligen Wirkposition einstellbar ist.

32. Torsionsschwingungsdämpfer nach den Ansprüchen 18 und 31,
**dadurch gekennzeichnet,**
**dass** zumindest ein die jeweilige Position des Fluidverdrängers (20) bestimmender Sensor (150) mit der Steuerungs- und oder Regelungsvorrichtung (129) verbunden ist.

33. Torsionsschwingungsdämpfer nach Anspruch 1,
**dadurch gekennzeichnet,**
**dass** der jeweilige Speicherraum (32) über einen Speicherraumanschluss (33) zur Anpassung des im Speicherraum (32) enthaltenen, durch das gasförmige Medium erzeugten Druckes verfügt.

34. Torsionsschwingungsdämpfer nach Anspruch 18,
**dadurch gekennzeichnet,**
**dass** das antriebsseitige Übertragungselement (88) über zumindest ein antriebsseitiges Ansteuerelement (37) und das abtriebsseitige Übertragungselement (92) über zumindest ein abtriebsseitiges Ansteuerelement (49) verfügt, die zwischen jeweils zwei über entgegengesetzte Wirkrichtungen verfügende Steuerkolben (17) zweier Federsysteme (14) eingreifen und unabhängig voneinander mit jeweils einem Steuerkolben (17) der beiden Federsystems (14) in Wirkverbindung bringbar sind.

35. Torsionsschwingungsdämpfer nach Anspruch 34,
**dadurch gekennzeichnet,**
**dass** die Steuerkolben (17) in Umfangsrichtung verlagerbar im Zylinderraum (13) des jeweiligen Zylinders (12) des Federsystems (14) angeordnet sind, und über je eine zugeordnete, mit fluidförmigem Medium befüllte Dichtkammer (61) und einen dieselbe gegenüber dem Speicherraum (32) abdichtenden Zusatztrennkolben (48) auf den jeweiligen Speicherraum (32) einwirken, der anderenends wenigstens durch den Trennkolben (30) und den Druckraum (27) begrenzt ist.

36. Torsionsschwingungsdämpfer nach Anspruch 12,
**dadurch gekennzeichnet,**
**dass** der wenigstens eine Zylinder (12) jedes Federsystems (14) jeweils in zumindest einer im wesentlichen ringförmigen Aufnahmeschale (62) des einen Übertragungselementes (88) aufgenommen ist.

37. Torsionsschwingungsdämpfer nach Anspruch 36,
**dadurch gekennzeichnet,**
**dass** die Aufnahmeschale (62) des einen Übertragungselementes (88) wenigstens eine erste Durchgriffsöffnung (64) für das zumindest eine antriebsseitige Ansteuerelement (37) und wenigstens eine zweite Durchgriffsöffnung (66) für das abtriebsseitige Ansteuerelement (49) aufweist.

38. Torsionsschwingungsdämpfer nach Anspruch 37,
**dadurch gekennzeichnet,**
**dass** die Durchgriffsöffnungen (64, 66) für die Ansteuerelemente (37, 49) mit Radialversatz zueinander in der Aufnahmeschale (62) des einen Übertragungselementes (88) vorgesehen sind.

39. Torsionsschwingungsdämpfer nach Anspruch 37 oder 38,
**dadurch gekennzeichnet,**
**dass** die Durchgriffsöffnungen (64, 66) für die Ansteuerelemente (37, 49) mit umfangsseitigen Drehwinkelbegrenzungen (76) für die Ansteuerelemente (37, 49) gegenüber der Aufnahmeschale (62) ausgebildet sind.

40. Torsionsschwingungsdämpfer nach den Ansprüchen 18 und 37,
**dadurch gekennzeichnet,**
**dass** die Steuerkolben (17) als Abdichtung des jeweiligen Zylinderraumes (13) gegenüber den Durchgriffsöffnungen (64, 66) für die Ansteuerelemente (37, 49) wirksam sind.

41. Torsionsschwingungsdämpfer nach Anspruch 36,
**dadurch gekennzeichnet,**
**dass** der zumindest im wesentlichen ringförmigen Aufnahmeschale (62) eine zumindest im wesentlichen ebenfalls ringförmige Zusatzaufnahmeschale (70) zugeordnet ist, die gemeinsam mit der Aufnahmeschale (62) den Speicherraum (32) umschließt, und den jeweiligen Zylinder (12) bildet.

42. Torsionsschwingungsdämpfer nach Anspruch 1,
**dadurch gekennzeichnet,**
**dass** der Speicherraum (32) des Federsystems (14) jeweils in einen Hauptspeicherraumanteil (59) und in einen Zusatzspeicherraumanteil (60) unterteilt ist, wobei die beiden Speicherraumanteile (59, 60) mittels wenigstens einer Speicherraumpassage (35) miteinander in Druckverbindung stehen.

43. Torsionsschwingungsdämpfer nach Anspruch 41 oder 42,
**dadurch gekennzeichnet,**
**dass** ein Speicherraumanteil (59, 60) der Aufnahmeschale (62) und der jeweils radial andere Speicherraumanteil (60) der Zusatzaufnahmeschale (70) zugeordnet ist.

44. Torsionsschwingungsdämpfer nach Anspruch 41 bis 43,
**dadurch gekennzeichnet,**
**dass** die Aufnahmeschale (62) und die Zusatzaufnahmeschale (70) radial zueinander angeordnet sind.

45. Torsionsschwingungsdämpfer nach Anspruch 41,
**dadurch gekennzeichnet,**
**dass** die jeweiligen Druckraumanschlüsse (72) bewegungsgesichert an der Aufnahmeschale (62) oder an der Zusatzaufnahmeschale (70) aufgenommen sind.

46. Torsionsschwingungsdämpfer nach Anspruch 45,
**dadurch gekennzeichnet,**
**dass** die Aufnahmeschale (62) und/oder die Zusatzaufnahmeschale (70) dem antriebsseitigen Übertragungselement (88) jeweils drehfest zugeordnet sind, und das antriebsseitige Übertragungselement (88) mittels einer Lagerung (54) eine Zentrierung sowie eine Axialsicherung eines das abtriebsseitige Ansteuerelement (49) beinhaltenden Ansteuerelemententrägers (58) bewirkt.

47. Torsionsschwingungsdämpfer nach Anspruch 46,
**dadurch gekennzeichnet,**
**dass** der Ansteuerelemententräger (58) zur drehfesten Aufnahme einer abtriebsseitigen Schwungmasse (56) vorgesehen ist.

48. Torsionsschwingungsdämpfer nach Anspruch 47,
**dadurch gekennzeichnet,**
**dass** in Achsrichtung zwischen dem Ansteuerelemententräger (58) und der abtriebsseitigen Schwungmasse (56) ein Deckelement (73) angeordnet ist, das ebenso wie die abtriebsseitige Schwungmasse (56) jeweils eine Abstützfläche für einen Axialenergiespeicher (74) bereit stellt.

49. Torsionsschwingungsdämpfer nach Anspruch 18,
**dadurch gekennzeichnet,**
**dass** der jeweilige Zylinder (12) des Federsystems (14) zur Bildung eines Zweirichtungszylinders über zwei einander entgegen gesetzt wirksame Steuerkolben (17) verfügt, die mit einem gemeinsamen Druckraum (27) zusammen wirken.

50. Torsionsschwingungsdämpfer nach Anspruch 49,
**dadurch gekennzeichnet,**
**dass** jedem Steuerkolben (17) des jeweiligen Zylinders (12) je ein Zusatztrennkolben (48) und je eine zwischen demselben und dem Steuerkolben (17) angeordnete Dichtkammer (61) zugeordnet ist.

51. Torsionsschwingungsdämpfer nach Anspruch 50,
**dadurch gekennzeichnet,**
**dass** die Steuerkolben (17) des jeweiligen Zylinders (12) jeweils durch ein Hohlrohr (78) gebildet sind, das über eine vorbestimmte Krümmung um eine Drehachse (99) der Übertragungselemente (88, 92) verfügt und an seiner dem Speicherraum (32) jeweils zugewandten Seite mittels eines Kolbenstempels (25) verschlossen ist.

52. Torsionsschwingungsdämpfer nach Anspruch 12,
**dadurch gekennzeichnet,**
**dass** die Zylinder (12) in Umfangsrichtung verlagerbar in einer Tragvorrichtung (82) aufgenommen sind, die über eine Relativdrehbarkeit gegenüber beiden Übertragungselementen (88, 92) verfügt und gegenüber den Übertragungselementen (88, 92) zentriert ist, wobei die Tragvorrichtung (82) Durchgriffe (93) für die Ansteuerelemente (37) zumindest eines Übertragungselementes (88) aufweist.

53. Torsionsschwingungsdämpfer nach Anspruch 52,
**dadurch gekennzeichnet,**
**dass** die Zylinder (12) jeweils über ein Zentriersegment (94) radial und axial in der Tragvorrichtung (82) positioniert sind.

54. Torsionsschwingungsdämpfer nach Anspruch 53,
**dadurch gekennzeichnet,**
**dass** das Zentriersegment (94) jeweils zumindest den Druckraumanschluß (72) des Zylinders (12) aufweist.

55. Torsionsschwingungsdämpfer nach den Ansprüchen 34 und 53,
**dadurch gekennzeichnet,**
**dass** das Zentriersegment (94) und/oder der Steuerkolben (17) über jeweils zumindest eine Nutung (95, 96) zum Eingriff der Ansteuerelemente (37, 49) verfügt.

56. Torsionsschwingungsdämpfer nach Anspruch 35,
**dadurch gekennzeichnet,**
**dass** der Hauptdruckraumanteil (28) an seinen umfangsseitigen Enden (153, 154) über jeweils einen Steuerkolben (17) verfügt und mittels zumindest einer Druckraumpassage (68) mit dem Zusatzdruckraumanteil (29) verbunden ist, der über eine Dichtkammer (61) und einen Trennkolben (30) mit dem Speicherraum (32) in Wirkverbindung steht.

57. Torsionsschwingungsdämpfer nach den Ansprüchen 4, 7 und 56,
**dadurch gekennzeichnet,**
**dass** die vom Druckleitelement (85) über die zweite Drehdurchführung (114) in den Hauptdruckraumanteil (28) führenden Fluidleitungen (38, 39) jeweils im Erstreckungsbereich zumindest eines der Steuerkolben (17) mittels Druckraumanschlüssen (72) bewegungsgesichert aufgenommen sind.

## Claims

1. Torsional vibration damper having a drive side transmission element (88), which is connected to a drive (1), a takeoff side transmission element (92), which can be brought into operative connection with a takeoff (86) and can be deflected rotationally relative to the drive side transmission element (88), and a damping device (31) provided between the two transmission elements (88, 92), the damping device (31) having a spring system (14) which serves to transmit a torque between the drive side transmission element and the takeoff side transmission element and has at least a reservoir space (32) containing a gaseous medium, **characterized in that** the respective reservoir space (32) of the spring system (14) is in operative connection with a respectively assigned fluid-containing pressure space (27) of a pressure circuit (120), it being possible, at least in the case of a change in the torque to be transmitted, to use the pressure circuit (120) to trigger at least substantially an adaptation of the characteristic of the spring system (14) to the changed torque by means of a readjustment of the pressure applied to the respective pressure space (27) since the respective pressure space (27) has a pressure space connection (72) for adaptation of the pressure contained in the pressure space (27) and produced by the fluid medium.

2. Torsional vibration damper according to Claim 1, **characterized in that** the respective pressure space (27) is accommodated by at least one transmission element (88), while an external pressure circuit section (121) is provided outside of the transmission elements (88, 92).

3. Torsional vibration damper according to Claim 1, **characterized in that** the external pressure circuit section (121) has a pressure connection to the respective pressure space (27) via at least one rotary lead-through (98, 114) comprising pressure circuit components (101, 85; 109, 85) that can be moved relative to each other.

4. Torsional vibration damper according to Claim 3, **characterized in that** the external pressure circuit section (121) has at least one pump (138), which has a pressure connection to a pressure guide element (85) via a feed line (100) and the first rotary lead-through (98), and **in that** the pressure guide element (85) is pressure-connected via the second rotary lead-through (114) to at least one feed line (34) leading into the respective pressure space (27).

5. Torsional vibration damper according to Claim 4, **characterized in that** the pressure guide element (85) has an integrated pressure line (108) as pressure connection between the two rotary lead-throughs (98, 114).

6. Torsional vibration damper according to Claim 4 or 5, **characterized in that** the pressure guide element (85) is formed by the takeoff (86).

7. Torsional vibration damper according to Claim 4, **characterized in that** the feed line (34) leading from the pressure guide element (85) into the respective pressure space (27) via the second rotary lead-through (114) has a number of fluid lines (38, 39) dependent on the number of pressure spaces (27).

8. Torsional vibration damper according to Claim 4, **characterized in that** the feed line (100) leading from the pressure guide element (85) to the pump (138) via the first rotary lead-through (98) has a number of fluid lines (102, 103) dependent on the number of pressure spaces (27).

9. Torsional vibration damper according to Claims 2 and 4, **characterized in that** the first rotary lead-through (98) has a pressure circuit component (101) which is part of the external pressure circuit section (121).

10. Torsional vibration damper according to Claim 4, **characterized in that** the second rotary lead-through (114) has a pressure circuit component (109) which is part of the transmission element (92) accommodating the pressure space (27).

11. Torsional vibration damper according to Claim 1, **characterized in that** the pressure space (27) of the pressure circuit (120) has a pressure connection to the respective reservoir space (32) of the spring system (14) via at least one separating piston (30).

12. Torsional vibration damper according to Claim 11, **characterized in that** the separating piston (30) is arranged in a cylinder space (13) of at least one cylinder (12) of the respective spring system (14), said cylinder being contained in a cylinder receptacle (15), in such a way that it can be moved in the direction of extension of the cylinder space (13) and interacts with a seal (22), by means of which exchange of the viscous medium in the pressure space (27) and of the gaseous medium in the reservoir space (32) is at least limited.

13. Torsional vibration damper according to Claim 1, **characterized in that** the spring system (14) is assigned at least one pressure setting device (127) for the purpose of setting a pressure prevailing in the reservoir space (32) thereof, the said pressure setting device setting the pressure in the corresponding pressure space (27).

14. Torsional vibration damper according to Claim 12, **characterized in that** the cylinder space (13) and the pressure space (27) or at least the main pressure space section (28) of the spring system (14) are substantially ring-shaped in the circumferential direction.

15. Torsional vibration damper according to Claim 12, **characterized in that** the cylinder space (13) of the spring system (14) and the pressure space (27) are accommodated at least substantially in the drive side transmission element (88), while the pressure setting device (127) that sets the pressure in the pressure space (27) is at least substantially assigned to the takeoff side transmission element (92).

16. Torsional vibration damper according to Claim 12, **characterized in that** the damping device (31) has at least one spring system (14) for each direction of rotary deflection of a transmission element (88, 92), the said spring system comprising a cylinder (12) having at least one reservoir space (32), one separating piston (30) and one pressure space (27), and the spring systems (14) for the two directions of rotary deflection act in opposition to each other.

17. Torsional vibration damper according to Claim 14, **characterized in that** at least some of the spring systems (14) of the damping device (31) have a pressure space (27) which is divided into a main pressure space section (28) and a supplementary pressure space section (29), the two pressure space sections (28, 29) having a pressure connection to each other via at least one reservoir space passage (35).

18. Torsional vibration damper according to Claims 13 and 17, **characterized in that** at least the main pressure space section (28) of the pressure space (27) is bounded by a fluid holder (18) and a fluid displacer (20), which can be moved relative to the said holder and serves as a pressure setting device (127), the said fluid displacer (20) having at least one fluid displacement element (23) acting as a control piston (17) and extending toward the fluid holder (18), and the fluid holder (18) having at least one fluid baffle element (24) extending toward the fluid displacer (20) and functionally assigned to the fluid displacement element (23).

19. Torsional vibration damper according to Claim 17, **characterized in that** the supplementary pressure space section (29) of the pressure space (27) is provided in the cylinder space (13) of the respective cylinder (12) of the spring system (14) together with the reservoir space (32) and the separating piston (30) isolating the two spaces (27, 32) from each other.

20. Torsional vibration damper according to Claim 18, **characterized in that** the fluid holder (18) is arranged radially adjacent to the cylinder receptacle (15) and, like the cylinder receptacle (15), is rotationally fixed with respect to one transmission element (88), while the fluid displacer (20) is provided on the opposite side of the fluid holder (18) from the cylinder receptacle (15), radially adjacent to the said holder, and is rotationally fixed with respect to the other transmission element (92).

21. Torsional vibration damper according to Claim 20, **characterized in that** the fluid holder (18) and the cylinder receptacle (15) are provided in a rotationally fixed manner on the drive side transmission element (88), while the fluid displacer (20) is used to attach the takeoff side transmission element (92) in a rotationally fixed manner.

22. Torsional vibration damper according to Claims 7 and 18, **characterized in that** the fluid lines (38, 39) leading from the pressure guide element (85) into the respective pressure space (27) via the second rotary lead-through (114) are mounted on the fluid displacer (20) in a manner secured against movement by means of pressure space connections (72).

23. Torsional vibration damper according to Claim 18, **characterized in that** the fluid holder (18) is fixed directly to the drive (1) and effects centring and axial fixing of the fluid displacer (20) by means of a bearing arrangement (54).

24. Torsional vibration damper according to Claim 4, **characterized in that** the pressure space (27) assigned to a first direction of rotary deflection of a transmission element (88, 92) is connected to the pump (138) via a first adjusting element group (122) in order to increase the pressure, and the pressure space (27) assigned to a second direction of rotary deflection of this transmission element (88, 92) is connected to the pump (138) via a second adjusting element group (123) in order to increase the pressure.

25. Torsional vibration damper according to Claim 24, **characterized in that** each of the two adjusting element groups (122, 123) is connected to the pump (138) via a supply reservoir (136) for viscous medium.

26. Torsional vibration damper according to Claim 25, **characterized in that** the supply reservoir (136) can be placed in pressure connection with a discharge side (D) of the pump (138).

27. Torsional vibration damper according to Claim 24, **characterized in that** the pressure space (27) assigned to a first direction of rotary deflection of a transmission element (88, 92) is connected to the pump (138) via a third adjusting element group (124) in order to lower the pressure, and the pressure space (27) assigned to a second direction of rotary deflection of this transmission element (88, 92) is connected to the pump (138) via a fourth adjusting element group (125) in order to lower the pressure.

28. Torsional vibration damper according to Claim 27, **characterized in that** each of the two adjusting element groups (124, 125) is connected to the pump (138) via a low-pressure reservoir (132) for viscous medium.

29. Torsional vibration damper according to Claim 28, **characterized in that** the low-pressure reservoir (132) can be placed in pressure connection with one suction side (S2) of the pump (138).

30. Torsional vibration damper according to Claim 29, **characterized in that** a further suction side (S1) of the pump (138) can be placed in pressure connection with a pressure medium supply (152).

31. Torsional vibration damper according to Claim 27, **characterized in that** at least one adjusting element (142 to 149) of the adjusting element groups (122 to 125) and a pump drive (139) of the pump (138) is connected to an open-loop and/or closed-loop control device (129) and can be adjusted by the latter as regards its respective operative position.

32. Torsional vibration damper according to Claims 18 and 31, **characterized in that** at least one sensor (150), which determines the respective position of the fluid displacer (20), is connected to the open-loop and/or closed-loop control device (129).

33. Torsional vibration damper according to Claim 1, **characterized in that** the respective reservoir space (32) has a reservoir space connection (33) for adaptation of the pressure contained in the reservoir space (32) and produced by the gaseous medium.

34. Torsional vibration damper according to Claim 18, **characterized in that** the drive side transmission element (88) has at least one drive side driver element (37) and the takeoff side transmission element (92) has at least one takeoff-side driver element (49), which each engage between two control pistons (17) with opposite directions of action in two spring systems (14) and can be brought into operative connection with in each case one control piston (17) of the two spring systems (14) independently of each other.

35. Torsional vibration damper according to Claim 34, **characterized in that** the control pistons (17) are arranged in the cylinder space (13) of the respective cylinder (12) of the spring system (14) in such a way as to be movable in the circumferential direction and act via a respectively assigned sealing chamber (61) filled with medium in fluid form and via a supplementary separating piston (48), which seals off the said chamber from the reservoir space (32), on the respective reservoir space (32), which is bounded at the other end at least by the separating piston (30) and the pressure space (27).

36. Torsional vibration damper according to Claim 12, **characterized in that** the at least one cylinder (12) of each spring system (14) is in each case accommodated in at least one substantially ring-shaped receiving shell (62) of one transmission element (88).

37. Torsional vibration damper according to Claim 36, **characterized in that** the receiving shell (62) of one transmission element (88) has at least one first access opening (64) for the at least one drive side driver element (37), and at least one second access opening (66) for the takeoff side driver element (49).

38. Torsional vibration damper according to Claim 37, **characterized in that** the access openings (64, 66) for the driver elements (37, 49) are provided with a radial offset relative to each other in the receiving shell (62) of one transmission element (88).

39. Torsional vibration damper according to Claim 37 or 38, **characterized in that** the access openings (64, 66) for the driver elements (37, 49) are designed with circumferential rotational angle limiters (76) for the driver elements (37, 49) with respect to the receiving shell (62).

40. Torsional vibration damper according to Claims 18 and 37, **characterized in that** the control pistons (17) act as a seal for the respective cylinder space (13) with respect to the access openings (64, 66) for the driver elements (37, 49).

41. Torsional vibration damper according to Claim 36, **characterized in that** the at least substantially ring-shaped receiving shell (62) is assigned a supplementary receiving shell (70), which is likewise at least substantially ring-shaped and, together with the receiving shell (62), surrounds the reservoir space (32), and forms the respective cylinder (12).

42. Torsional vibration damper according to Claim 1, **characterized in that** the reservoir space (32) of the spring system (14) is in each case subdivided into a main reservoir space section (59) and a supplementary reservoir space section (60), the two reservoir space sections (59, 60) being in pressure connection with each other by means of at least one reservoir space passage (35).

43. Torsional vibration damper according to Claim 41 or 42, **characterized in that** one reservoir space section (59, 60) is assigned to the receiving shell (62) and the respective reservoir space section (60) in a radially different position is assigned to the supplementary receiving shell (70).

44. Torsional vibration damper according to Claim 41 to 43, **characterized in that** the receiving shell (62) and the supplementary receiving shell (70) are arranged radially with respect to each other.

45. Torsional vibration damper according to Claim 41, **characterized in that** the respective pressure space connections (72) are mounted on the receiving shell (62) or on the supplementary receiving shell (70) in a manner secured against movement.

46. Torsional vibration damper according to Claim 45, **characterized in that** the receiving shell (62) and/or the supplementary receiving shell (70) are assigned to the drive side transmission element (88), in each case in a rotationally fixed manner, and, by means of a bearing arrangement (54), the drive side transmission element (88) effects centring and axial fixing of a driver element carrier (58) which includes the takeoff side driver element (49).

47. Torsional vibration damper according to Claim 46, **characterized in that** the driver element carrier (58) is provided for the purpose of holding a takeoff side flywheel (56) in a rotationally fixed manner.

48. Torsional vibration damper according to Claim 47, **characterized in that** a cover element (73) is arranged axially between the driver element carrier (58) and the takeoff side flywheel (56), the cover and the takeoff side flywheel (56) each having a support surface for an axial energy storage device (74).

49. Torsional vibration damper according to Claim 18, **characterized in that**, to form a double acting cylinder, the respective cylinder (12) of the spring system (14) has two control pistons (17) acting in opposite directions, which interact with a common pressure space (27).

50. Torsional vibration damper according to Claim 49, **characterized in that** each control piston (17) of the respective cylinder (12) is assigned a supplementary separating piston (48) and a sealing chamber (61) arranged between the said separating piston and the control piston (17).

51. Torsional vibration damper according to Claim 50, **characterized in that** the control pistons (17) of the respective cylinder (12) are each formed by a hollow tube (78), which has a predetermined curvature around an axis (99) of rotation of the transmission elements (88, 92) and is closed by means of a piston plunger (25) at its end facing the respective reservoir space (32).

52. Torsional vibration damper according to Claim 12, **characterized in that** the cylinders (12) are accommodated in a manner which allows movement thereof in the circumferential direction in a carrier device (82) which has a capacity for relative rotation with respect to both transmission elements (88, 92) and is centred with respect to the transmission elements (88, 92), the carrier device (82) having access openings (93) for the driver elements (37) of at least one transmission element (88).

53. Torsional vibration damper according to Claim 52, **characterized in that** the cylinders (12) are each positioned radially and axially in the carrier device (82) by means of a centring segment (94).

54. Torsional vibration damper according to Claim 53, **characterized in that** the centring segment (94) in each case has at least the pressure space connection (72) of the cylinder (12).

55. Torsional vibration damper according to Claims 34 and 53, **characterized in that** the centring segment (94) and/or the control piston (17) has/have in each case at least one groove (95, 96) for engagement of the driver elements (37, 49).

56. Torsional vibration damper according to Claim 35, **characterized in that** the main pressure space section (28) has a control piston (17) at each of its circumferential ends (153, 154) and is connected by means of at least one pressure space passage (68) to the supplementary pressure space section (29), which is in operative connection with the reservoir space (32) via a sealing chamber (61) and a separating piston (30).

57. Torsional vibration damper according to Claims 4, 7 and 56, **characterized in that** the fluid lines (38, 39) leading from the pressure guide element (85) into the main pressure space section (28) via the second rotary lead-through (114) are each accommodated in the region of extent of at least one of the control pistons (17) in a manner secured against movement by means of pressure space connections (72).

## Revendications

1. Amortisseur d'oscillations de torsion, présentant un élément de transmission côté entraînement (88) relié à un entraînement (1), un élément de transmission côté sortie (92) pouvant être mis en liaison active avec une sortie (86) et pouvant être dévié angulairement par rapport à l'élément de transmission côté entraînement (88), et un dispositif d'amortissement (31) avec un système de ressort (14), prévu entre les deux éléments de transmission (88, 92), qui sert pour la transmission d'un couple de rotation entre l'élément de transmission côté entraînement et l'élément d'entraînement côté sortie et comporte au moins une chambre d'accumulation (32) avec un milieu gazeux, **caractérisé en ce que** la chambre d'accumulation respective (32) du système de ressort (14) est en liaison active avec une chambre de pression (27) d'un circuit de pression (120) respectivement associée et contenant un milieu fluide, dans lequel au moins essentiellement une adaptation de la courbe caractéristique du système de ressort (14) au couple de rotation modifié peut être effectuée par le circuit de pression (120), au moins lors d'une modification du couple de rotation à transmettre, au moyen d'un nouveau réglage de la pression appliquée dans la chambre de pression respective (27), du fait que la chambre de pression respective (27) est munie d'un raccord de chambre de pression (72) pour l'adaptation de la pression produite par le milieu fluide et contenue dans la chambre de pression (27).

2. Amortisseur d'oscillations de torsion selon la revendication 1, **caractérisé en ce que** la chambre de pression respective (27) est logée dans au moins un élément de transmission (88), tandis qu'il est prévu une partie du circuit de pression (121) à l'extérieur des éléments de transmission (88, 92).

3. Amortisseur d'oscillations de torsion selon la revendication 1, **caractérisé en ce que** la partie extérieure de circuit de pression (121) est en communication de pression avec la chambre de pression respective (27) au moyen d'au moins un passage rotatif (98, 114) avec des pièces du circuit de pression (101, 85 ; 109, 85) mobiles l'une par rapport à l'autre.

4. Amortisseur d'oscillations de torsion selon la revendication 3, **caractérisé en ce que** la partie extérieure du circuit de pression (121) est équipée d'au moins une pompe (138), qui est en communication de pression avec un élément de conduite de pression (85) par une conduite d'arrivée (100) et le premier passage rotatif (98), et **en ce que** l'élément de conduite de pression (85) est relié en pression, par le deuxième passage rotatif (114), à au moins une conduite d'arrivée (34) conduisant dans la chambre de pression respective (27).

5. Amortisseur d'oscillations de torsion selon la revendication 4, **caractérisé en ce que** l'élément de conduite de pression (85) est muni d'une conduite de pression intégrée (108) comme communication de pression entre les deux passages rotatifs (98, 114).

6. Amortisseur d'oscillations de torsion selon la revendication 4 ou 5, **caractérisé en ce que** l'élément de conduite de pression (85) est formé par la sortie (86).

7. Amortisseur d'oscillations de torsion selon la revendication 4, **caractérisé en ce que** la conduite d'arrivée (34) conduisant de l'élément de conduite de pression (85) dans la chambre de pression respective (27) via le deuxième passage rotatif (114) est munie, en ce qui concerne le nombre, de conduites de fluide (38, 39) dépendant du nombre de chambres de pression (27).

8. Amortisseur d'oscillations de torsion selon la revendication 4, **caractérisé en ce que** la conduite d'arrivée (100) conduisant de l'élément de conduite de pression (85) à la pompe (138) via le premier passage rotatif (98) est munie, concernant le nombre, de conduites de fluide (102, 103) dépendant du nombre de chambres de pression (27).

9. Amortisseur d'oscillations de torsion selon les revendications 2 et 4, **caractérisé en ce que** le premier passage rotatif (98) est muni d'une pièce de circuit de pression (101), qui fait partie de la partie extérieure du circuit de pression (121).

10. Amortisseur d'oscillations de torsion selon la revendication 4, **caractérisé en ce que** le deuxième passage rotatif (114) est muni d'une pièce de circuit de pression (109), qui fait partie de l'élément de transmission (92) contenant la chambre de pression (27).

11. Amortisseur d'oscillations de torsion selon la revendication 1, **caractérisé en ce que** la chambre de pression (27) du circuit de pression (120) est en communication de pression avec la chambre d'accumulation respective (32) du système de ressort (14) par l'intermédiaire d'au moins un piston de séparation (30).

12. Amortisseur d'oscillations de torsion selon la revendication 11, **caractérisé en ce que** le piston de séparation (30) est disposé dans une chambre de cylindre (13) d'au moins un cylindre (12) du système de ressort respectif (14) contenu dans un logement de cylindre (15), de façon déplaçable dans la direction d'extension de la chambre de cylindre (13), et coopère avec un joint d'étanchéité (22), par lequel un échange du milieu visqueux dans la chambre de pression (27) et du milieu gazeux dans la chambre d'accumulation (32) est au moins limité.

13. Amortisseur d'oscillations de torsion selon la revendication 1, **caractérisé en ce qu'**au moins un dispositif de prédétermination de pression (127) réglant la pression dans la chambre de pression correspondante (27) est associé au système de ressort (14) pour la prédétermination de la pression régnant dans la chambre d'accumulation (32) de celui-ci.

14. Amortisseur d'oscillations de torsion selon la revendication 12, **caractérisé en ce que** la chambre de cylindre (13) ainsi que la chambre de pression (27) ou au moins une partie de chambre de pression principale (28) du système de ressort (14) est essentiellement annulaire dans la direction périphérique.

15. Amortisseur d'oscillations de torsion selon la revendication 12, **caractérisé en ce que** la chambre de cylindre (13) du système de ressort (14) ainsi que la chambre de pression (27) est logée au moins pour l'essentiel dans l'élément de transmission côté entraînement (88), tandis que le dispositif de prédétermination de pression (127) réglant la pression dans la chambre de pression (27) est associé au moins pour l'essentiel à l'élément de transmission côté sortie (92).

16. Amortisseur d'oscillations de torsion selon la revendication 12, **caractérisé en ce que** le dispositif d'amortissement (31) est respectivement muni, pour chaque direction de déviation angulaire d'un élément de transmission (88, 92), d'au moins un système de ressort (14) avec un cylindre (12) comprenant au moins une chambre d'accumulation (32), un piston de séparation (30) ainsi qu'une chambre de pression (27), et les systèmes de ressort (14) des deux directions de déviation angulaire opèrent en opposition l'un à l'autre.

17. Amortisseur d'oscillations de torsion selon la revendication 14, **caractérisé en ce qu'**au moins une partie des systèmes de ressort (14) du dispositif d'amortissement (31) est équipée d'une chambre de pression (27), qui est divisée en une partie de chambre de pression principale (28) et une partie de chambre de pression auxiliaire (29), dans lequel les deux parties de chambre de pression (28, 29) sont en communication de pression l'une avec l'autre par l'intermédiaire d'au moins un passage de chambre d'accumulation (35).

18. Amortisseur d'oscillations de torsion selon les revendications 13 et 17, **caractérisé en ce qu'**au moins la partie de chambre de pression principale (28) de la chambre de pression (27) est limitée par un récepteur de fluide (18) et un déplaceur de fluide (20), mobile par rapport à celui-ci et servant de dispositif de prédétermination de pression (127), dans lequel ce dernier est muni d'au moins un élément de déplacement de fluide (23) s'étendant en direction du récepteur de fluide (18) et opérant comme piston de commande (17) et le récepteur de fluide (18) est muni d'au moins un élément de retenue de fluide (24) s'étendant en direction du déplaceur de fluide (20) et associé fonctionnellement à l'élément de déplacement de fluide (23).

19. Amortisseur d'oscillations de torsion selon la revendication 17, **caractérisé en ce que** la partie de chambre de pression auxiliaire (29) de la chambre de pression (27) est prévue, avec la chambre d'accumulation (32) et le piston de séparation (30) isolant l'une de l'autre les deux chambres (27, 32), dans la chambre de cylindre (13) du cylindre respectif (12) du système de ressort (14).

20. Amortisseur d'oscillations de torsion selon la revendication 18, **caractérisé en ce que** le récepteur de fluide (18) est disposé radialement au voisinage du logement de cylindre (15) et, comme le logement de cylindre (15), il est solidaire en rotation d'un élément de transmission (88), tandis que le déplaceur de fluide (20) est prévu sur le côté du récepteur de fluide (18) situé à l'opposé du logement de cylindre (15), radialement au voisinage de celui-ci, et il est solidaire en rotation de l'autre élément de transmission respectif (92).

21. Amortisseur d'oscillations de torsion selon la revendication 20, **caractérisé en ce que** le récepteur de fluide (18) ainsi que le logement de cylindre (15) est prévu de façon solidaire en rotation sur l'élément de transmission côté entraînement (88), tandis que le déplaceur de fluide (20) sert pour la liaison solidaire en rotation de l'élément de transmission côté sortie (92).

22. Amortisseur d'oscillations de torsion selon les revendications 7 et 18, **caractérisé en ce que** les conduites de fluide (38, 39) conduisant de l'élément de conduite de pression (85) dans la chambre de pression respective (27) via le deuxième passage rotatif (114) sont installées, en étant protégées contre un mouvement, sur le déplaceur de fluide (20) au moyen de raccords de chambre de pression (72).

23. Amortisseur d'oscillations de torsion selon la revendication 18, **caractérisé en ce que** le récepteur de fluide (18) est fixé directement sur l'entraînement (1) et assure, au moyen d'un appui (54), un centrage ainsi qu'une retenue axiale du déplaceur de fluide (20).

24. Amortisseur d'oscillations de torsion selon la revendication 4, **caractérisé en ce que** la chambre de pression (27) associée à une première direction de déviation angulaire d'un élément de transmission (88, 92) est reliée à la pompe (138) par un premier groupe d'organes de réglage (122) pour l'augmentation de pression et la chambre de pression (27) associée à une deuxième direction de déviation angulaire de cet élément de transmission (88, 92) est reliée à la pompe (138) par un deuxième groupe d'organes de réglage (123) pour l'augmentation de pression.

25. Amortisseur d'oscillations de torsion selon la revendication 24, **caractérisé en ce que** chacun des deux groupes d'organes de réglage (122, 123) est raccordé respectivement à la pompe (138) par un accumulateur d'alimentation (136) pour milieu visqueux.

26. Amortisseur d'oscillations de torsion selon la revendication 25, **caractérisé en ce que** l'accumulateur d'alimentation (136) peut être déplacé en communication de pression avec un côté de refoulement (D) de la pompe (138).

27. Amortisseur d'oscillations de torsion selon la revendication 24, **caractérisé en ce que** la chambre de pression (27) associée à une première direction de déviation angulaire d'un élément de transmission (88, 92) est reliée à la pompe (138) par un troisième groupe d'organes de réglage (124) pour la diminution de pression et la chambre de pression (27) associée à une deuxième direction de déviation angulaire de cet élément de transmission (88, 92) est reliée à la pompe (138) par un quatrième groupe d'organes de réglage (125) pour la diminution de pression.

28. Amortisseur d'oscillations de torsion selon la revendication 27, **caractérisé en ce que** chacun des deux groupes d'organes de réglage (124, 125) est raccordé respectivement à la pompe (138) par un accumulateur basse pression (132) pour milieu visqueux.

29. Amortisseur d'oscillations de torsion selon la revendication 28, **caractérisé en ce que** l'accumulateur basse pression (132) peut être déplacé en communication de pression avec un côté d'aspiration (S2) de la pompe (138).

30. Amortisseur d'oscillations de torsion selon la revendication 29, **caractérisé en ce qu'**un autre côté d'aspiration (S1) de la pompe (138) peut être déplacé en communication de pression avec un réservoir de fluide sous pression (152).

31. Amortisseur d'oscillations de torsion selon la revendication 27, **caractérisé en ce qu'**au moins un organe de réglage (142 à 149) des groupes d'organes de réglage (122 à 125) ainsi qu'un entraînement de pompe (139) de la pompe (138) est relié à un dispositif de commande et/ou de régulation (129) et peut être réglé par celui-ci en ce qui concerne sa position active.

32. Amortisseur d'oscillations de torsion selon les revendications 18 et 31, **caractérisé en ce qu'**au moins un capteur (150) déterminant la position respective du déplaceur de fluide (20) est relié au dispositif de commande et/ou de régulation (129).

33. Amortisseur d'oscillations de torsion selon la revendication 1, **caractérisé en ce que** la chambre d'accumulation respective (32) est munie d'un raccord de chambre d'accumulation (33) pour l'adaptation de la pression produite par le milieu gazeux et contenue dans la chambre d'accumulation (32).

34. Amortisseur d'oscillations de torsion selon la revendication 18, **caractérisé en ce que** l'élément de transmission côté entraînement (88) est doté d'au moins un élément de commande côté entraînement (37) et l'élément de transmission côté sortie (92) est doté d'au moins un élément de commande côté sortie (49), qui interviennent respectivement entre deux pistons de commande (17) de deux systèmes de ressort (14) présentant deux directions actives opposées et peuvent être mis en liaison active indépendamment l'un de l'autre respectivement avec un piston de commande (17) des deux systèmes de ressort (14).

35. Amortisseur d'oscillations de torsion selon la revendication 34, **caractérisé en ce que** les pistons de commande (17) sont disposés de façon déplaçable en direction périphérique dans la chambre de cylindre (13) du cylindre respectif (12) du système de ressort (14), et agissent chacun par une chambre étanche associée (61), remplie de milieu fluide, et par un piston de séparation auxiliaire (48) fermant celle-ci de façon étanche par rapport à la chambre d'accumulation (32), sur la chambre d'accumulation respective (32), qui est limitée à son autre extrémité au moins par le piston de séparation (30) et la chambre de pression (27).

36. Amortisseur d'oscillations de torsion selon la revendication 12, **caractérisé en ce que** ledit au moins un cylindre (12) de chaque système de ressort (14) est logé respectivement dans au moins une coque de logement essentiellement annulaire (62) d'un premier élément de transmission (88).

37. Amortisseur d'oscillations de torsion selon la revendication 36, **caractérisé en ce que** la coque de logement (62) du premier élément de transmission (88) présente au moins une première ouverture de pénétration (64) pour ledit au moins un élément de commande côté entraînement (37) et au moins une deuxième ouverture de pénétration (66) pour l'élément de commande côté sortie (49).

38. Amortisseur d'oscillations de torsion selon la revendication 37, **caractérisé en ce que** les ouvertures de pénétration (64, 66) pour les éléments de commande (37, 49) sont prévues avec un décalage radial l'une par rapport à l'autre dans la coque de logement (62) du premier élément de transmission (88).

39. Amortisseur d'oscillations de torsion selon la revendication 37 ou 38, **caractérisé en ce que** les ouvertures de pénétration (64, 66) pour les éléments de commande (37, 49) sont réalisées avec des limitations d'angle de rotation côté périphérie (76) pour les éléments de commande (37, 49) par rapport à la coque de logement (62).

40. Amortisseur d'oscillations de torsion selon les revendications 18 et 37, **caractérisé en ce que** les pistons de commande (17) sont actifs comme joint d'étanchéité de la chambre de cylindre respective (13) par rapport aux ouvertures de pénétration (64, 66) pour les éléments de commande (37, 49).

41. Amortisseur d'oscillations de torsion selon la revendication 36, **caractérisé en ce qu'**à la coque de logement au moins essentiellement annulaire (62) est associée une coque de logement auxiliaire (70) également au moins essentiellement annulaire, qui entoure avec la coque de logement (62) la chambre d'accumulation (32) et forme le cylindre respectif (12).

42. Amortisseur d'oscillations de torsion selon la revendication 1, **caractérisé en ce que** la chambre d'accumulation (32) du système de ressort (14) est chaque fois divisée en une partie de chambre d'accumulation principale (59) et une partie de chambre d'accumulation auxiliaire (60), dans lequel les deux parties de chambre d'accumulation (59, 60) sont en communication de pression l'une avec l'autre au moyen d'au moins un passage de chambre d'accumulation (35).

43. Amortisseur d'oscillations de torsion selon la revendication 41 ou 42, **caractérisé en ce qu'**une partie de chambre d'accumulation (59, 60) est associée à la coque de logement (62) et l'autre partie de chambre d'accumulation (60), respectivement radiale, est associée à la coque de logement auxiliaire (70).

44. Amortisseur d'oscillations de torsion selon les revendications 41 à 43, **caractérisé en ce que** la coque de logement (62) et la coque de logement auxiliaire (70) sont disposées radialement l'une par rapport à l'autre.

45. Amortisseur d'oscillations de torsion selon la revendication 41, **caractérisé en ce que** les raccords de chambre de pression respectifs (72) sont installés, en étant protégés contre un mouvement, sur la coque de logement (62) ou sur la coque de logement auxiliaire (70).

46. Amortisseur d'oscillations de torsion selon la revendication 45, **caractérisé en ce que** la coque de logement (62) et/ou la coque de logement auxiliaire (70) sont associées à l'élément de transmission côté entraînement (88), chaque fois de façon solidaire en rotation, et l'élément de transmission côté entraînement (88) assure, au moyen d'un appui (54), un centrage ainsi qu'une retenue axiale d'un support d'élément de commande (58) contenant l'élément de commande côté sortie (49).

47. Amortisseur d'oscillations de torsion selon la revendication 46, **caractérisé en ce que** le support d'élément de commande (58) est prévu pour contenir de façon solidaire en rotation une masse d'équilibrage côté sortie (56).

48. Amortisseur d'oscillations de torsion selon la revendication 47, **caractérisé en ce qu'**un élément de couvercle (73) est disposé entre le support d'élément de commande (58) et la masse d'équilibrage côté sortie (56) dans la direction axiale, lequel, ainsi que la masse d'équilibrage côté sortie (56), procure respectivement une face d'appui pour un accumulateur d'énergie axial (74).

49. Amortisseur d'oscillations de torsion selon la revendication 18, **caractérisé en ce que** le cylindre respectif (12) du système de ressort (14) est doté de deux pistons de commande (17) agissant en opposition l'un à l'autre pour la formation d'un cylindre à deux directions, lesquels pistons coopèrent avec une chambre de pression commune (27).

50. Amortisseur d'oscillations de torsion selon la revendication 49, **caractérisé en ce qu'**un piston de séparation auxiliaire (48) et une chambre étanche (61) disposée entre celui-ci et le piston de commande (17) sont associés à chaque piston de commande (17) du cylindre respectif (12).

51. Amortisseur d'oscillations de torsion selon la revendication 50, **caractérisé en ce que** les pistons de commande (17) du cylindre respectif (12) sont chaque fois formés par un tube creux (78), qui est doté d'une courbure prédéterminée autour d'un axe de rotation (99) des éléments de transmission (88, 92) et qui est fermé au moyen d'un tampon de piston (25) à son côté tourné respectivement vers la chambre d'accumulation (32).

52. Amortisseur d'oscillations de torsion selon la revendication 12, **caractérisé en ce que** les cylindres (12) sont logés de façon déplaçable en direction périphérique dans un dispositif porteur (82), qui est doté d'une possibilité de rotation relative par rapport aux deux éléments de transmission (88, 92) et qui est centré par rapport aux éléments de transmission (88, 92), dans lequel le dispositif porteur (82) présente des passages (93) pour les éléments de commande (37) d'au moins un élément de transmission (88).

53. Amortisseur d'oscillations de torsion selon la revendication 52, **caractérisé en ce que** les cylindres (12) sont respectivement positionnés radialement et axialement dans le dispositif porteur (82) au moyen d'un segment de centrage (94).

54. Amortisseur d'oscillations de torsion selon la revendication 53, **caractérisé en ce que** le segment de centrage (94) présente chaque fois au moins un raccord de chambre de pression (72) du cylindre (12).

55. Amortisseur d'oscillations de torsion selon les revendications 34 et 53, **caractérisé en ce que** le segment de centrage (94) et/ou le piston de commande (17) est respectivement doté d'au moins un rainurage (95, 96) pour l'intervention des éléments de commande (37, 49).

56. Amortisseur d'oscillations de torsion selon la revendication 35, **caractérisé en ce que** la partie de chambre de pression principale (28) est respectivement munie d'un piston de commande (17) à ses extrémités côté périphérie (153, 154) et est reliée à la partie de chambre de pression auxiliaire (29) au moyen d'au moins un passage de chambre de pression (68), laquelle partie est en liaison active avec la chambre d'accumulation (32) par une chambre étanche (61) et un piston de séparation (30).

57. Amortisseur d'oscillations de torsion selon les revendications 4, 7 et 56, **caractérisé en ce que** les conduites de fluide (38, 39) conduisant de l'élément de conduite de pression (85) dans la partie de chambre de pression principale (28) via le deuxième passage rotatif (114) sont respectivement installées, en étant protégées contre le mouvement, dans la région d'extension d'au moins un des pistons de commande (17) au moyen de raccords de chambre de pression (72).
